# EUROPEAN PATENT APPLICATION

(11) **EP 4 775 375 A1**
(43) Date of publication of application: **15.07.2026**
(21) Application number: 26150864.2
(22) Date of filing: 08.01.2026
(51) Int. Cl.: B29C 44/06, B29C 44/12, A43B 13/02, A43B 13/18, B29D 35/14, B29C 31/00

(54) **SYSTEMS AND METHODS FOR MANUFACTURING AN ARTICLE OF FOOTWEAR**

(30) Priority: 10.01.2025 US 202563743981 P
(71) Applicant: PUMA SE, 91074 Herzogenaurach (DE)
(72) Inventor: HARTMANN, Matthias, 91301 Forchheim (DE)
(74) Representative: Gosdin, Carstensen & Partner Patentanwälte Partnerschaftgesellschaft mbB

(57) **Abstract**

A preformed component for a foam structure includes one or more polymer sheets (200; 200A, 200B, 200C) having first unit cells (222A) that are repeatedly oriented to define a first pattern along a first region. The first unit cells (222A) are connected by a plurality of ridges (204) and a plurality of grooves (208) to provide deformation in a first direction and second unit cells (222B) that are repeatedly oriented to define a second pattern along a second region. The second unit cells (222B) are connected by a plurality of ridges (204) and a plurality of grooves (208) to provide deformation in a second direction. When the preformed component is foamed, the foam structure includes a first plurality of cells having a shape substantially similar to the shape of the first unit cells (222A) and a second plurality of cells having a shape substantially similar to the shape of the second unit cells (222B).

## Description

### BACKGROUND

### Field of the Disclosure

The present disclosure relates generally to manufacturing a portion of an article of footwear using a mold, and more particularly, a portion of a sole structure of an article of footwear.

### Description of Background

Generally, an article of footwear includes an upper defining an interior space that is configured to receive a foot of a user. A sole structure is typically attached to a lower end of the upper and extends between the upper and a support surface, *e.g*., the ground. As a result, the sole structure typically provides stability and cushioning to the user when the shoe is being worn and/or is in use. In some instances, the sole structure may include multiple components, such as an outsole, a midsole, and an insole. The outsole may provide traction along a bottom surface of the sole, and the midsole may be attached to an upper surface of the outsole to extend generally between the outsole and the upper.

In many cases, at least a portion of the sole structure, *e.g*., the midsole, can be a foam component that is formed using one or more molds. With conventional processes, such foam components are typically formed using either an injection molding process or a compression molding process. In an injection molding process, a liquid material, typically a polymeric material, is injected into a mold cavity and cured to form the foam component. In a compression molding process, a blank is placed in a mold and then heated to expand the blank within the mold to form the foam component. However, such conventional molding processes can limit performance characteristics of the molded component, for example, cushioning, elasticity, stability, density, and weight. Further, foam components can be produced using various manufacturing techniques (e.g., additive manufacturing, thermoforming, die cutting, laser cutting), some of which offer distinct advantages over traditional methods. These alternative techniques may enhance specific performance attributes or provide greater design flexibility, contributing to improved overall functionality and comfort.

### SUMMARY

A method for manufacturing a foam component for a sole structure includes the steps of fabricating a polymer sheet, drying the polymer sheet, slitting the polymer sheet to form one or more unit cells, the unit cells configured to provide different characteristics or behaviors along directions of the polymer sheet, resizing the polymer sheets into proportions of the sole structure, arranging and stacking the polymer sheets, positioning the polymer sheets within a cavity of an autoclave injecting a blowing agent into the cavity of the autoclave, the blowing agent becoming a supercritical fluid that saturates the polymer sheets dropping the pressure within the cavity of the autoclave to trigger foaming of the polymer sheets to form the foam component, and removing the foam component from the autoclave.

According to some aspects of the disclosure, a preformed component can include one or more polymer sheets including a first polymer sheet, a second polymer sheet, and a third polymer sheet. In some embodiments, the one or more polymer sheets have a tessellation that is defined by repeated unit cells. Each of the unit cells has a geometric shape that is repeated in a pattern. The unit cells can be interconnected by flexible hinges that are ridges or grooves, which facilitate bending between adjacent unit cells of the tessellation to allow the one or more polymer sheets to be folded into a preformed form. The first polymer sheet is folded into a first preformed form and is stacked above the second polymer sheet which is folded into a second preformed form, which creates a first gap between the first polymer sheet and the second polymer sheet. The third polymer sheet is folded into a third preformed form and is stacked above the second polymer sheet, which is folded into the second preferred form which creates a second gap between the second polymer sheet and the third polymer sheet.

According to additional aspects of the disclosure, a foam component comprises a firm foam layer defining a first microcellular structure. Additionally, a second foam layer defines a second microcellular structure. The second foam layer is coupled to the first foam layer such that a macrocellular structure is defined between the first foam layer and the second foam layer. The first foam layer is a first folded polymer sheet, and the second foam layer is a second folded polymer sheet that is distinct from the first folded polymer sheet. The first microcellular structure and the second microcellular structure are an open-celled structure. The macrocellular structure is an open-celled structure. The first folded polymer sheet and the second folded polymer sheet include a supercritical foam. The first foam layer and the second foam layer are co-foamed layers, such that the first foam layer is adhered directly to the second foam layer.

In some embodiments, a plate is coupled between the first foam layer and the second foam layer, such that the macrocellular structure includes a first macrocellular structure defined between the first foam layer and the plate. A second macrocellular structure may be defined between the second foam layer and the plate. In alternate embodiments, the foam component may also include a foam block coupled to at least one of the first foam layer or the second foam layer. The first foam layer may include a plurality of first folds corresponding to a plurality of first pre-folds of a first unfoamed layer. The second foam layer includes a plurality of second folds corresponding to a plurality of second pre-folds of a second unfoamed layer. Further, a plurality of first folds corresponds to a first preset molecular orientation of a first unfoamed layer. A second foam layer includes a plurality of second folds corresponds to a preset second molecular orientation of a second unfoamed layer. Additionally, the macrocellular structure defines a repeating cell. It is contemplated that the first foam later and the second foam layer are a midsole of an article of footwear.

Other aspects of the articles of footwear or portions of the articles of footwear described herein, as well as methods of making the same, including features and advantages thereof, will become apparent to one of ordinary skill in the art upon examination of the figures and detailed description herein. Therefore, all such aspects of the articles of footwear are intended to be included in the detailed description and this summary.

### BRIEF DESCRIPTION OF THE DRAWINGS

FIG. 1 is a top and lateral perspective view of an article of footwear according to aspects of the present disclosure;
FIG. 2 is a lateral side view of the article of footwear of FIG. 1;
FIG. 3 is a medial side view of the article footwear of FIG. 1;
FIG. 4 is a top plan view of the article of footwear of FIG. 1;
FIG. 5 is a top plan view of the article of footwear of FIG. 1, with an upper removed and a user's skeletal foot structure overlaid on the article of footwear;
FIG. 6 is a bottom plan view of a preformed component prior to foaming, the preformed component being a polymer sheet, the polymer sheet including a first tessellation at a forefoot region, a second tessellation at a midfoot region, and a third tessellation at a heel region;
FIG. 7 is a lateral perspective view of the polymer sheet of FIG. 5, with a portion of the sole structure shown in a stacked configuration;
FIG. 8 is a perspective view of the stacked configuration of polymer sheets of FIG. 7 disposed between an upper foam layer and a lower foam layer;
FIG. 9 is a top plan view of an alternative configuration of a polymer sheet having a zigzag tessellation;
FIG. 10 is a lateral side view of the polymer sheet of FIG. 9 shown in a stacked configuration, the stacked polymer sheets disposed between an upper layer and a lower layer;
FIG. 11A is a top plan view of an alternative configuration of a polymer sheet shown in a resting configuration;
FIG. 11B is a top plan view of the polymer sheet of FIG. 11A in a compressed configuration;
FIG. 12 is perspective view of a foam component fabricated via the stacked configuration of polymer sheets of FIG. 7;
FIG. 13 is a perspective view of an alternative configuration of a polymer sheet disposed between an upper layer and a lower layer, the polymer sheet having a corrugated structure;
FIG. 14A is a schematic view illustrating a configuration of a polymer sheet fold;
FIG. 14B is a schematic view illustrating an alternative configuration of a polymer sheet fold;
FIG. 15A is a schematic view of multiple polymer layers;
FIG. 15B is a schematic view of an alternative configuration of multiple polymer layers;
FIG. 16 is a perspective view of an alternative configuration of a honeycomb structure disposed between an upper layer and a lower layer, the upper layer and the lower layer combining to define a polymer sheet;
FIG. 17A is a schematic view illustrating a first configuration of yet another alternative configuration of a polymer sheet fold;
FIG. 17B is a schematic view illustrating a second configuration of the alternative configuration of a polymer sheet fold of FIG. 17A;
FIG. 18 is a schematic view illustrating yet another alternative configuration of a polymer sheet fold; and
FIG. 19 is a schematic view illustrating a method for manufacturing a foam component from the polymer sheets.

### DETAILED DESCRIPTION OF THE DRAWINGS

The following discussion and accompanying figures disclose various embodiments or configurations of a shoe. Although embodiments are disclosed with reference to a sports shoe, such as a running shoe, tennis shoe, basketball shoe, etc., concepts associated with embodiments of the shoe may be applied to a wide range of footwear and footwear styles, including basketball shoes, cross-training shoes, football shoes, golf shoes, hiking shoes, hiking boots, ski and snowboard boots, soccer shoes and cleats, walking shoes, and track cleats, for example. Concepts of the shoe may also be applied to articles of footwear that are considered non-athletic, including dress shoes, sandals, loafers, slippers, and heels. In addition to footwear, particular concepts described herein may also be applied and incorporated in other types of articles, including apparel or other athletic equipment, such as helmets, padding or protective pads, shin guards, and gloves. Even further, particular concepts described herein may be incorporated in cushions, backpacks, suitcases, backpack straps, golf clubs, or other consumer or industrial products. Accordingly, concepts described herein may be utilized in a variety of products.

The term "about," as used herein, refers to variation in the numerical quantity that may occur, for example, through typical measuring and manufacturing procedures used for articles of footwear or other articles of manufacture that may include embodiments of the disclosure herein; through inadvertent error in these procedures; through differences in the manufacture, source, or purity of the ingredients used to make the compositions or mixtures or carry out the methods; and the like. Throughout the disclosure, the terms "near," "about," and "approximately" refer to a range of values ± 5% of the numeric value that the term precedes.

Further, as used herein, unless otherwise defined or limited, directional terms are used for convenience of reference for discussion of particular figures or examples. For example, references to "downward," or other directions, or "lower" or other positions, may be used to discuss aspects of a particular example or figure, but do not necessarily require similar orientation or geometry in all installations or configurations. The terms first, second, third, etc. may be used herein to describe various elements, components, regions, layers and/or sections. These elements, components, regions, layers and/or sections should not be limited by these terms. These terms may be only used to distinguish one element, component, region, layer, or section from another region, layer, or section. Terms such as "first," "second," and other numerical terms do not imply a sequence or order unless clearly indicated by the context. Thus, a first element, component, region, layer, or section discussed below could be termed a second element, component, region, layer, or section without departing from the teachings of the example configurations.

The present disclosure relates to foam components for use in various applications including articles of clothing, furniture, vehicles, and other consumer or industrial products that incorporate a unique multi-scale cellular architecture. The foam component includes one or more foamed polymer sheets that have been subjected to a supercritical foaming process. Each foamed sheet has a microcellular structure comprising numerous small cells distributed throughout the material. The microcellular structure may be open-celled, where the cells are interconnected and allow fluid communication between adjacent cells, or closed-celled, where individual cells are isolated from one another by cell walls. The microcellular structure provides cushioning, flexibility, and energy absorption properties at a microscopic level within each sheet.

In addition to the microcellular structure within individual sheets, the foam component includes a macrocellular structure formed by the arrangement of multiple foamed sheets. The polymer sheets are folded along ridges and grooves that function as flexible hinges, creating a three-dimensional configuration with unit cells arranged in tessellated patterns. When multiple folded sheets are stacked or arranged (e.g., rolled, bent, interlaced, etc.) in layers, voids are formed between adjacent sheets. These voids define the macrocellular structure, which operates at a larger scale than the microcellular structure within the sheets themselves. The macrocellular structure may also be open-celled or closed-celled, depending on whether the voids between sheets are interconnected or isolated from one another.

The combination of microcellular and macrocellular structures provides enhanced performance characteristics for the foam component. The microcellular structure within each foamed sheet contributes to material-level cushioning and resilience, while the macrocellular structure formed between stacked sheets provides additional cushioning and support at a structural level. The dual-scale cellular architecture allows for customization of cushioning properties in different regions of the foam component by varying the size, shape, and arrangement of unit cells in the tessellated patterns, as well as by controlling the degree of folding and stacking of the polymer sheets.

The foaming process creates the microcellular structure by introducing a supercritical fluid into the polymer sheets, which nucleates and expands to form cells throughout the material. The macrocellular structure is predetermined by the tessellation pattern and folding configuration of the sheets prior to foaming. During the foaming process, the microcellular structures (i.e., the polymer sheets) expand, causing the sheet to change in shape (e.g., bending, twisting, folding, etc., in accordance with the tessellated pattern) and to form the voids between sheets. As a result, the microcellular structures enlarge and the final macrocellular architecture is formed between the polymer sheets. The resulting foam component exhibits improved cushioning, energy return, and weight reduction compared to conventional foam components, while maintaining structural integrity through the interconnected network of folded sheets and the dual-scale cellular frameworks.

In some aspects, the tessellation pattern may be arranged to influence the folding behavior of adjacent polymer sheets when they are stacked together. The orientation and geometry of the unit cells within the tessellation can determine how the polymer sheets interact with one another during the folding process. For example, when a first polymer sheet with a first tessellation pattern is positioned adjacent to a second polymer sheet with a second tessellation pattern, the ridges of the first polymer sheet may align with the grooves of the second polymer sheet, or vice versa. This alignment can create an interdigitated configuration where the raised portions of one sheet fit into the recessed portions of an adjacent sheet, thereby influencing the degree and direction of folding that occurs when the sheets are compressed or manipulated.

In some cases, the tessellation patterns of adjacent sheets may be designed to be complementary, such that the ridges and grooves of one sheet correspond to the grooves and ridges of an adjacent sheet. This complementary arrangement can facilitate controlled folding along predetermined axes or directions, allowing the stacked assembly to deform in a predictable manner when subjected to external forces. The tessellation may also be arranged such that the unit cells of adjacent sheets are offset or rotated relative to one another, which can create different void geometries between the sheets and influence the mechanical properties of the resulting foam component.

In some aspects, the polymer sheets may become coupled to one another during the folding process through mechanical interlocking of the tessellation features. As the sheets are folded and stacked, the ridges of one sheet may nest within the grooves of an adjacent sheet, creating a mechanical connection that holds the sheets in position relative to one another. This interlocking may occur without the need for additional bonding agents, although in some cases adhesives or fillers may be applied between the sheets to enhance the coupling. The degree of coupling between adjacent sheets may be influenced by the depth of the grooves, the height of the ridges, and the angle at which the sheets are folded relative to one another.

In some cases, the folding process itself may cause the polymer sheets to become coupled through localized melting at the surfaces of adjacent sheets. As the sheets are foamed and folded, the heat may cause localized melting at contact points between adjacent sheets, creating molecular bonding that permanently couples the sheets together. Alternatively, heat-activated adhesives may be applied to the surfaces of the polymer sheets prior to folding, with the adhesives becoming activated during the folding process due to heat generated from compression or from an external heat source. The tessellation pattern may be designed to control the distribution of heat and pressure during folding, thereby determining where localized melting or adhesive activation occurs to selectively couple the sheets in desired regions while leaving other areas uncoupled for flexibility.

In some aspects, additional components may be coupled to the polymer sheets to enhance performance characteristics or provide additional functionality. For example, foam layers may be positioned above or below the polymer sheets to provide supplementary cushioning or to create a transition between the structured polymer sheets and other components of the article. These foam layers may be bonded to the polymer sheets using adhesives, or may be co-molded with the polymer sheets during the foaming process to create a unitary structure. The foam layers may have different densities or material compositions compared to the polymer sheets, allowing for customization of cushioning properties in different regions.

In some cases, rigid or semi-rigid plates may be coupled to the polymer sheets to provide additional support or energy return. These plates may be made from materials such as carbon fiber, thermoplastic polyurethane, nylon, or composite materials. The plates may be positioned between layers of polymer sheets, or may be positioned above or below the polymer sheets. In some aspects, the plates may include apertures or cutouts that align with the voids between the polymer sheets, allowing the foam component to expand through the apertures during the foaming process and creating a mechanical interlock between the plate and the foam component.

In some aspects, the polymer sheets may include protrusions or recesses that are configured to receive corresponding features on adjacent components. For example, a foam layer positioned above the polymer sheets may include protrusions that extend into the gaps between ridges of the polymer sheets, creating a mechanical interlock that holds the components together. Similarly, a plate positioned below the polymer sheets may include recesses that receive the ridges of the polymer sheets, preventing relative movement between the components.

In some cases, the additional components may be coupled to the polymer sheets prior to the foaming process, such that the entire assembly is foamed together to create a cohesive structure. This approach may enhance bonding between the components by allowing the expanding foam to flow around and through features of the additional components. Alternatively, the additional components may be coupled to the polymer sheets after the foaming process using adhesives, stitching, welding, or other bonding methods.

In some aspects, textile layers or mesh materials may be coupled to the polymer sheets to provide abrasion resistance or to create a finished surface. These textile layers may be laminated to the polymer sheets using heat and pressure, or may be bonded using adhesives.

The textile layers may be positioned on one or both sides of the polymer sheets, and may extend across the entire surface or only in selected regions.

Foam components according to the present disclosure are described herein in the context of an article of footwear; however it is appreciated that the principles discussed herein can also be applied to other foam components. In some aspects, the present disclosure is directed to an article of footwear or specific components of the article of footwear, such as an upper or a sole or sole structure, and methods for making the same. The upper may comprise a knitted component, a woven textile, a non-woven textile, leather, mesh, suede, or a combination of one or more of the aforementioned materials. The knitted component may be made by knitting of yarn, the woven textile by weaving of yarn, and the non-woven textile by manufacture of a unitary non-woven web. Knitted textiles include textiles formed by way of warp knitting, weft knitting, flat knitting, circular knitting, or other suitable knitting operations. The knit textile may have a plain knit structure, a mesh knit structure, or a rib knit structure, for example. Woven textiles include, but are not limited to, textiles formed by way of any of the numerous weave forms, such as plain weave, twill weave, satin weave, dobbin weave, jacquard weave, double weaves, or double cloth weaves, for example. Non-woven textiles include textiles made by air-laid or spun-laid methods, for example. The upper may comprise a variety of materials, such as a first yarn, a second yarn, or a third yarn, which may have varying properties or varying visual characteristics.

In some embodiments, the upper may comprise an inner layer and an outer layer, which may provide a mixture of stretch and stability. The inner layer and the outer layer may be attached to one another by stitching, an adhesive, welding, or other connection methods as are known in the art. The inner layer may be made of material that allows the upper to stretch in multiple directions, for example, a 4-way stretch material, so that the upper is both snug and comfortable, and can conform to the foot of a user. In addition to providing the upper with a layer that is flexible and can better conform to a foot of a user, the inner layer may provide for a more comfortable upper that reduces friction or other rubbing between the foot of a user and the upper. The outer layer is made from a resilient woven material, which may resist stretching.

In some cases, the upper may further include a heel cup coupled to and substantially surrounding the heel of a user. The heel cup is a rigid or semi-rigid structure that may provide additional support for the foot of a user. The heel cup may be made of a plastic, for example, TPU, or a composite material. In some cases, the heel cup is transparent or translucent.

In addition, the present disclosure relates to an article of footwear having a sole structure attached to the upper. The sole structure includes a midsole that may be attached to the upper, an outsole attached below the midsole and defining a bottom of the article of footwear, and a number of sole elements. In some embodiments, the midsole and the outsole may be a unitary body made from a foam or a rubber material, which cushion the user's foot as it impacts the ground and gives the user traction. In other embodiments, the midsole and the outsole may constitute different components which may be co-molded or adhered together by a glue or other adhesive. The midsole may be a foamed thermoplastic element that provides cushioning for a user. As a few particular examples, the midsole may be made from one or more thermoplastic materials, such as thermoplastic polyurethane, ethylene-vinyl acetate, nylon, nylon polyamide, thermoplastic elastomer, thermoplastic polyamide, etc. In some cases, a midsole can include other types of materials, including non-thermoplastic materials. The outsole may be a rubber material to increase traction and durability. In some cases, the midsole can be a multi-density midsole with two or more layers having different densities to provide tuned cushioning characteristics. Additionally, the outsole may be formed from one or more outsole sections, which can be received within a corresponding recess formed in a bottom of the midsole.

In some embodiments, a portion of the sole structure may include a polymer sheet. The polymer sheet can include ridges and grooves that from a pattern of repeated shapes. In some cases, the polymer sheet may include or define various patterns along a length of the sole structure between a forefoot region and a heel region. In some cases, the polymer sheet can be disposed within a midsole of the sole structure or a plurality of polymer sheets can be disposed within a midsole of the sole structure. In particular, the plurality of polymer sheets can be stacked in series (e.g., one layer on top of another layer) with space(s) disposed between each layer of the polymer sheets. In some embodiments, the spaces between each layer of the polymer sheets can be filled by a filler. In some examples, the filler can include one or more binding agents that bind together the layers of the polymer sheets. In some embodiments, the one or more polymer sheets can be foamed to form the midsole of the sole structure through various foaming methods (e.g., injection molding, compression molding, supercritical foaming). Alternatively, and additionally, the filler material between the polymer sheets can be foamed.

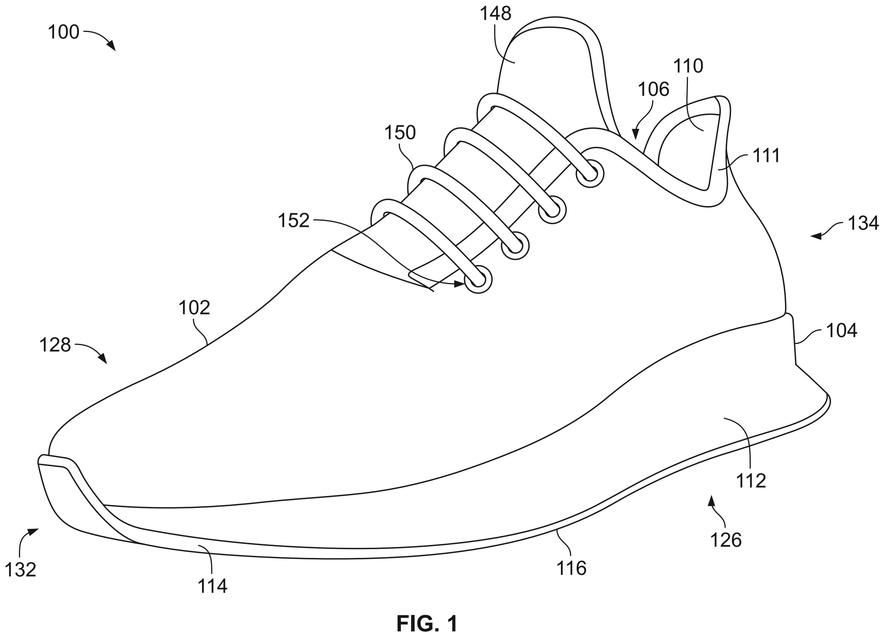

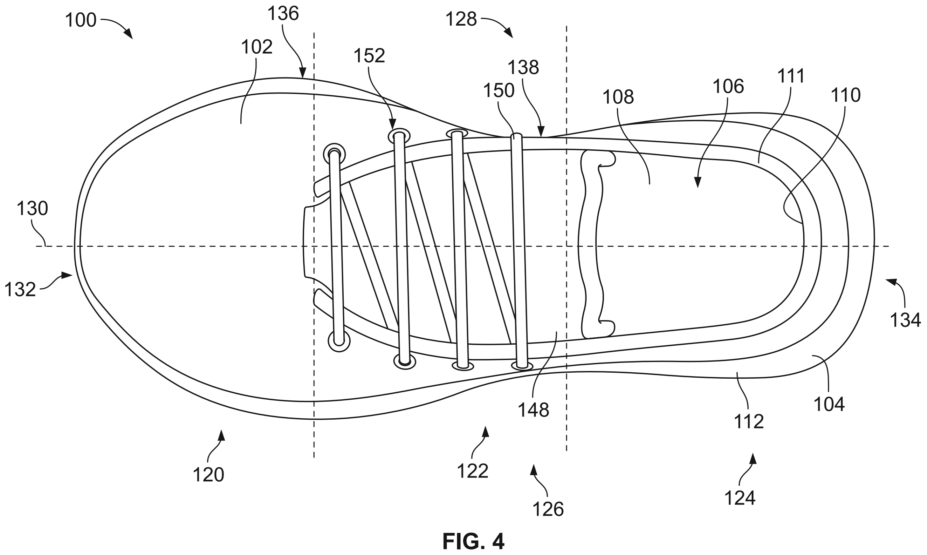

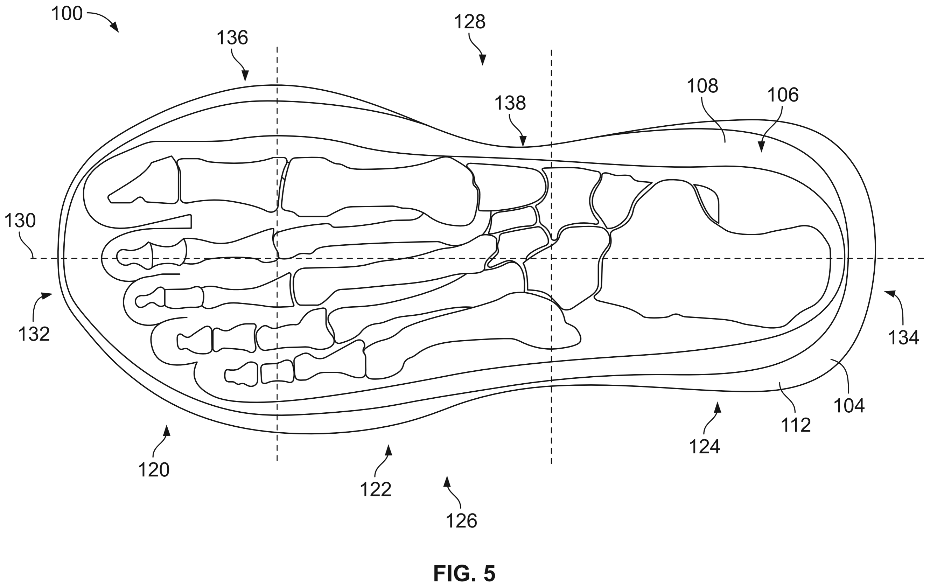

Referring now to the figures, FIGS. 1-5 depict an exemplary embodiment of an article of footwear 100 including an upper 102 and a sole structure 104. As will be discussed in further detail below, the upper 102 is coupled with the sole structure 104 and together with the sole structure 104 defines an interior cavity 106 (see FIG. 4) into which a foot of a user may be inserted. The upper 102 may also include an insole 108 (see FIG. 4) positioned within the interior cavity 106 that may be connected to or in contact with an interior surface of the article of footwear 100. The insole 108 may directly contact a user's foot while the article of footwear 100 is being worn. In some embodiments, an upper may include a liner 110 that makes the article of footwear 100 more comfortable to wear, for example, by reducing friction between the foot of the user and the article of footwear 100 when the article of footwear 100 is being worn, or providing moisture wicking properties. The liner 110 may line the entire interior cavity 106 or only a portion of the interior cavity 106. In other embodiments, a collar or binding 111 may surround the opening of the interior cavity 106 to secure the liner 110 to the upper 102 or to provide an aesthetic element on the article of footwear 100. Furthermore, the sole structure 104 includes a midsole 112 and an outsole 114 coupled to and disposed generally below the midsole 112. The outsole 114 defines a bottom surface 116 of the article of footwear 100 that is configured to contact the ground. In some embodiments, lugs (not shown) or other tractive elements may be provided along the bottom surface 116 to provide a user with increased traction.

The article of footwear 100 generally defines a forefoot region 120, a midfoot region 122, and a heel region 124 (see FIG. 4). The forefoot region 120 generally corresponds with portions of the article of footwear 100 that encase portions of the foot that include the toes, the ball of the foot, and joints connecting the metatarsals with the toes or phalanges. The midfoot region 122 is proximate and adjoining the forefoot region 120, and generally corresponds with portions of the article of footwear 100 that encase the arch of a foot, along with the bridge of a foot. The heel region 124 is proximate and adjoining the midfoot region 122 and generally corresponds with portions of the article of footwear 100 that encase rear portions of the foot, including the heel or calcaneus bone, the ankle, or the Achilles tendon.

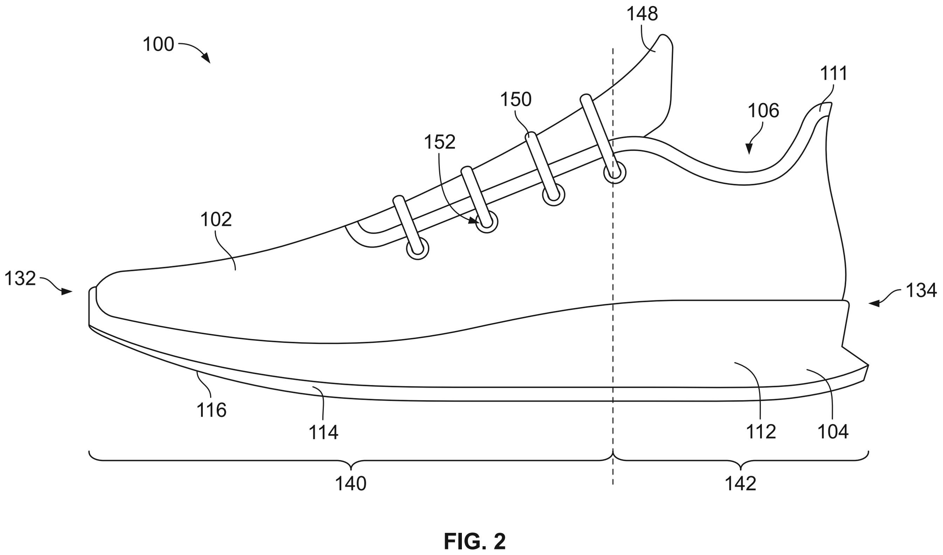

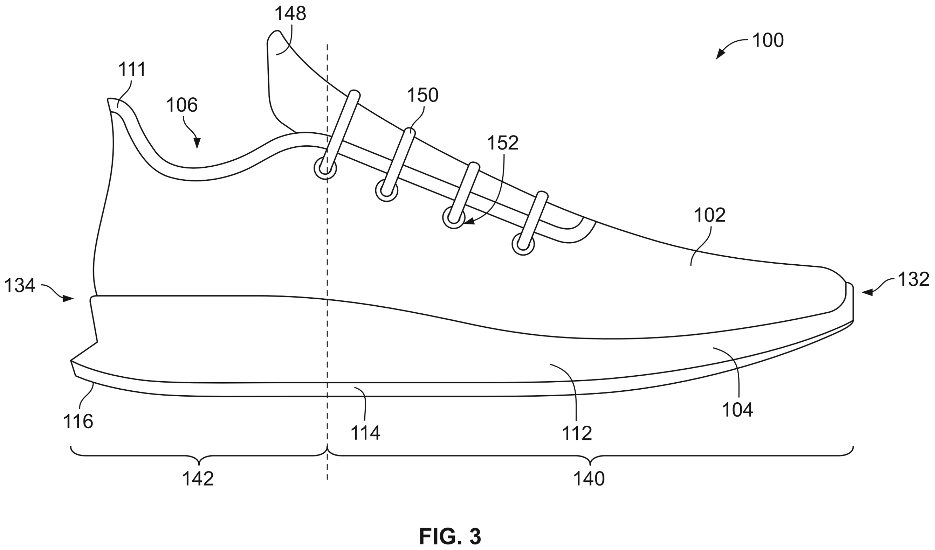

The article of footwear 100 also defines a lateral side 126 (see FIG. 2), and a medial side 128 (see FIG. 3). Further, the article of footwear 100 defines a longitudinal axis 130 (see FIG. 34) that extends from a toe end 132, located at a distal end of the forefoot region 120, to a heel end 134, located at a distal end of the heel region 124 opposite the toe end 132. The longitudinal axis 130 defines a middle of the article of footwear 100 with the lateral side 126 extending from one side of the longitudinal axis 130 and the medial side 128 extending from the other. Put another way, the lateral side 126 and the medial side 128 adjoin one another along the longitudinal axis 130. In particular, the lateral side 126 corresponds to an outside portion of the article of footwear 100 and the medial side 128 corresponds to an inside portion of the article of footwear 100. As such, left and right articles of footwear have opposing lateral 126 and medial 128 sides, such that the medial sides 128 are closest to one another when a user is wearing the article of footwear 100, while the lateral sides 126 are defined as the sides that are farthest from one another while being worn.

The forefoot region 120, the midfoot region 122, the heel region 124, the medial side 128, and the lateral side 126 are intended to define boundaries or areas of the article of footwear 100, and collectively span an entire length of the article of footwear 100, from the toe end 132 to the heel end 134. It should be appreciated that aspects of the disclosure may refer to portions or elements that are coextensive with one or more of the forefoot region 120, the midfoot region 122, the heel region 124, the medial side 128, or the lateral side 126. As shown in FIG. 4, the forefoot region 120 extends from the toe end 132 to a widest portion 136 of the article of footwear 100, i.e., a distance between the medial side 128 and the lateral side 126 of the sole structure 104. The midfoot region 122 extends from the widest portion 136 to a thinnest portion 138 of the article of footwear 100, i.e., a distance between the medial side 128 and the lateral side 126 of the sole structure 104. The heel region 124 extends from the thinnest portion 138 to the heel end 134 of the article of footwear 100.

The lateral side 126 begins where the toe end 132 intersects the longitudinal axis 130 and bows outward, i.e., away from the longitudinal axis 130, along the forefoot region 120 toward the midfoot region 122. At the widest portion 136, the lateral side 126 bows inward, i.e., toward the longitudinal axis 130 and toward the thinnest portion 138, entering the midfoot region 122. Upon reaching the thinnest portion 138, the lateral side 126 bows outward and extends into the heel region 124. The lateral side 126 then bows back inward toward the heel end 134 and terminates where the heel end 134 intersects with the longitudinal axis 130.

The medial side 128 begins where the toe end 132 intersects the longitudinal axis 130 and bows outward, i.e., away from the longitudinal axis 130, along the forefoot region 120 toward the midfoot region 122. At the widest portion 136, the medial side 128 bows inward, i.e., toward the longitudinal axis 130, toward the thinnest portion 138, entering the midfoot region 122. Upon reaching the thinnest portion 138, the medial side 128 bows outward and extends into the heel region 124. The medial side 128 then bows back inward toward the heel end 134 and terminates where the heel end 134 intersects with the longitudinal axis 130.

It should be understood that numerous modifications may be apparent to those skilled in the art in view of the foregoing description, and individual components thereof, may be incorporated into numerous articles of footwear. Accordingly, aspects of the article of footwear 100 and components thereof, may be described with reference to general areas or portions of the article of footwear 100, with an understanding that the boundaries of the forefoot region 120, the midfoot region 122, the heel region 124, the lateral side 126, and/or the medial side 128 as described herein may vary between articles of footwear. Furthermore, aspects of the article of footwear and individual components thereof, may also be described with reference to exact areas or portions of the article of footwear 100 and the scope of the appended claims herein may incorporate the limitations associated with these boundaries of the forefoot region 120, the midfoot region 122, the heel region 124, the lateral side 126, and/or the medial side 128 discussed herein.

With continued reference to FIGS. 1-5, an upper is configured to at least partially enclose the foot of a user and may be made from one or more materials. In the illustrated embodiment, the upper 102 is disposed above and is coupled to the sole structure 104, and defines the interior cavity 106 that receives and secures a foot of a user. The upper 102 may be defined by a foot region 140 and an ankle region 142. In general, the foot region 140 extends upwardly from the sole structure 104 and through the forefoot region 120 and the midfoot region 122, and, in some embodiments, into the heel region 124. The ankle region 142 is primarily located in the heel region 124; however, in some embodiments, the ankle region 142 may partially extend into the midfoot region 122.

The upper 102 extends along the entirety of each of the medial 128 and lateral 126 sides, as well as extending over the top of the forefoot region 120 and around the heel region 124. An upper can be formed from one or more layers. For example, many conventional uppers are formed from multiple elements, e.g., textiles, polymer foam, polymer sheets, leather, and synthetic leather, that are joined through bonding or stitching at a seam. In various embodiments, a knitted component may incorporate various types of yarn that may provide different properties to an upper. In other embodiments, the upper may incorporate multiple layers of different materials, each having different properties, for example, increased breathability or moisture wicking.

With reference to the material(s) that comprise the upper 102, the specific properties that a particular type of yarn will impart to an area of a knitted component may at least partially depend upon the materials that form the various filaments and fibers of the yarn. For example, cotton may provide a soft effect, biodegradability, or a natural aesthetic to a knitted material. Elastane and stretch polyester may each provide a knitted component with a desired elasticity and recovery. Rayon may provide a high luster and moisture absorbent material, wool may provide a material with an increased moisture absorbance, nylon may be a durable material that is abrasion-resistant, and polyester may provide a hydrophobic, durable material.

Other aspects of a knitted component may also be varied to affect the properties of the knitted component and provide desired attributes. For example, a yarn forming a knitted component may include monofilament yarn or multifilament yarn, or the yarn may include filaments that are each formed of two or more different materials. In addition, a knitted component may be formed using a particular knitting process to impart an area of a knitted component with particular properties. Accordingly, both the materials forming the yarn and other aspects of the yarn may be selected to impart a variety of properties to particular areas of the upper 102.

A number of other features may also be coupled to or included in an upper to provide or enhance certain properties of the upper. For example, the upper 102 can include a tongue 148 that may further include a tongue lining and/or a foam pad to increase comfort. The tongue 148 may be a separate component that is attached to the upper 102 or it may be integrally formed with one or more layers of the upper 102. Additionally, the upper 102 can also include a tensioning system, e.g., laces 150, that allows a user to adjust the upper to fit a foot of a user. The tensioning system can extend through a midfoot region and/or a forefoot region of the upper and may be attached to the upper by an attachment structure. For example, in the illustrated embodiment, the upper 102 includes a plurality of holes 152, e.g., punch holes or eyelets, that are configured to slidably receive the laces 150 so that the user can secure the article of footwear 100 to a foot, e.g., by tightening and tying the laces 150. In other embodiments, a tensioning system may be a laceless fastening system, or other type of tensioning system known in the art.

Further, in some instances, other elements, e.g., plastic material, logos, trademarks, etc., may also be applied and fixed to an exterior surface of the upper 102 using glue or a thermoforming process. In some embodiments, the properties associated with the upper 102, e.g., a stitch type, a yarn type, or characteristics associated with different stitch types or yarn types, such as elasticity, aesthetic appearance, thickness, air permeability, or scuff-resistance, may be varied.

With continued reference to FIGS. 1-5, the upper 102 is joined with the sole structure 104, which extends between the upper 102 and the ground. The sole structure 104 includes the midsole 112 and the outsole 114. In other embodiments, a sole structure may also include one or more other components, which may include a lasting board, a plate, or a strobel board (not shown), that are disposed between a midsole and an upper. Additionally, in some cases, a sole structure can further include a heel cup that couples with the upper in the heel region via an adhesive or stitching and provides additional support to a heel of a user. More specifically, a heel cup may be made from a rigid or semi-rigid material, for example TPU or a composite that allows the heel cup to flex or give as needed when a user is running or engaging in other activities, but otherwise provide more rigid support to the heel of a user. In some embodiments, a heel cup can be made of a translucent or clear TPU and may be used to enhance aesthetic appeal of the shoe.

The midsole 112 is defined as the portion of the sole structure 104 that extends between the upper 102 and the outsole 114. That is, the midsole 112 can be coupled with the upper 102, e.g., via the insole 108, at an upper surface of the midsole 112 and can be coupled with the outsole 114 on a lower surface of the midsole 112, opposite the upper 102. The midsole 112 extends along the length of the sole structure 104, throughout the forefoot region 120, the midfoot region 122, and the heel region 124. Additionally, the midsole 112 extends across the width of the sole structure 104 from a lateral side 126 to a medial side 128. However, in other embodiments, a midsole may include discrete midsole portions that only extend through portions of any of the forefoot region 120, the midfoot region 122, and the heel region 124.

The midsole 112 acts to cushion a user from the impact caused by the user's foot striking the ground. Put another way, the midsole 112 absorbs the impact resulting from a foot of a user coming into contact with the ground. To provide the desired cushioning characteristics, the thickness of the midsole 112, e.g., a dimension taken along a direction that is normal to the bottom surface 116, can be varied, with thicker regions providing greater cushioning and stability, e.g., the heel region 124 and thinner regions providing lesser cushioning and greater flexibility, e.g., the forefoot region 120.

The outsole 114 is defined as a portion of the sole structure 104 that at least partially contacts an exterior surface, e.g., the ground, when the article of footwear 100 is worn. Like the midsole 112, the outsole 114 can extend along the length of the sole structure 104, throughout the forefoot region 120, the midfoot region 122, and the heel region 124, and across the width of the sole structure 104 from a lateral side 126 to a medial side 128. However, in other embodiments, an outsole may include discrete outsole portions that only extend through portions of any of the forefoot region 120, the midfoot region 122, and the heel region 124. In some embodiments, the outsole 114 may be fabricated from an injection molded thermoplastic material, e.g., thermoplastic polyurethane, EVA, polyolefin elastomer, a rubber material, or mixtures thereof, which can resist wear resulting from contact with the ground in addition to increasing traction.

The term "foaming" or "foamed" discussed below refers to a process of creating a lightweight cushioning material by incorporating gas bubbles into a polymer or foam material to enhance the comfort, flexibility, and energy absorption (e.g., shock) of a sole structure, particularly, an outsole. In particular, the foaming may include a preformed component (e.g., component prior to foaming) that can be expanded to create a foam component. In particular, the foaming discussed below is directed to foaming of one or more polymer sheets (e.g., plastic sheets) having a three-dimensional aspect due to the texture caused by raised and lowered regions. In particular, the polymer sheets may include corrugated patterns, undulating patterns, creased patterns, foldable patterns, and fluted patterns to provide the three-dimensional aspect by having a series of grooves or ridges. The three-dimensional aspects provided by the series of grooves and ridges provide unique properties when the polymer sheet is foamed.

The term "creasing," "folding," or "bending" discussed below establishes the methods by which the preformed component (e.g., foamed plastic sheets) for a sole structure or midsole can be engineered to enhance flexibility and comfort. While each term has its specific definition, "folding," "creasing," and "bending" can be used interchangeably to describe the processes involved in shaping the material. "Creasing" refers to the deliberate formation of distinct lines or indentations along the surface of the preformed component, serving to clearly delineate the areas designated for folding or bending. This process not only improves the visual aesthetics of the component but also enhances its functional performance. "Folding" describes the intentional bending of the material along these established grooves and ridges, allowing the preformed component to collapse in a controlled manner in the desired direction. This action is important for optimizing cushioning and support, as it enables the sole to better conform to the contours of the foot during movement. "Bending," on the other hand, refers to the material's inherent ability to flex along strategically designed grooves and ridges, which ensures that the sole retains its structural integrity while adapting to the dynamic motions of the wearer. The combination of creasing, folding, and bending creates a synergistic effect that contributes to the unique characteristics and overall performance of the shoe sole, ultimately enhancing the user experience by providing improved comfort, support, and flexibility.

In an origami-inspired structure, the relationship of unit cells forming a tessellation can be characterized by repetition of geometric shapes that fit together seamlessly to create a cohesive structure. In other words, a tessellation can be defined as a pattern having a systematic arrangement of unit cells with integrated hinges that cover a surface without gaps or overlaps. In some examples, a thin sheet created via polymer or plastic allows for greater flexibility and ease of folding, making it preferred for complex designs. In some examples, a thicker sheet can be created via a polymer (e.g., elastomers or rubbers) or a plastic (e.g., thermoplastics or thermosetting plastics) to add durability and structural support. While all plastics are polymers, not all polymers are plastics. Polymers are large molecules composed of repeating structural units (monomers) bonded together in a chain-like or networked arrangement. Polymers can be either natural or synthetic. Plastics, on the other hand, refer specifically to synthetic polymers that are designed to be moldable or shapeable, particularly when heated. Plastics exhibit properties such as ease of processing, durability, and the ability to retain shapes after cooling, making them suitable for mass production of molded components. In both cases, the thin sheet and the thicker sheet can be considered a two-dimensional structure because it has length and width, with a fine thickness relative to the length and the width. When the polymer sheets are subjected to a supercritical foaming process, each sheet develops a microcellular structure comprising numerous small cells distributed throughout the material, which enhances cushioning and flexibility at the material level. Depending on the polymer type and foaming conditions, the microcellular structure may be open-celled where cell walls rupture and create interconnected pathways for air and fluid, or closed-celled where individual cells remain sealed by intact walls. For example, elastomeric polymers and aggressive expansion often favor open-cell formation for breathability and softness, while rigid thermoplastics processed under controlled cooling typically yield closed-cell structures for durability and water resistance. In some examples, when constructed from a polymer sheet, the unit cells can incorporate ridges and grooves formed integrally with the unit cells, forming a tessellation that facilitates movement and flexibility, similar to a living hinge. Each unit cell acts as a fundamental component of the tessellation and the arrangement of these unit cells allows for enhanced functionality as the folding along the ridges and grooves facilitate deformation, while the unit cells provide structural support.

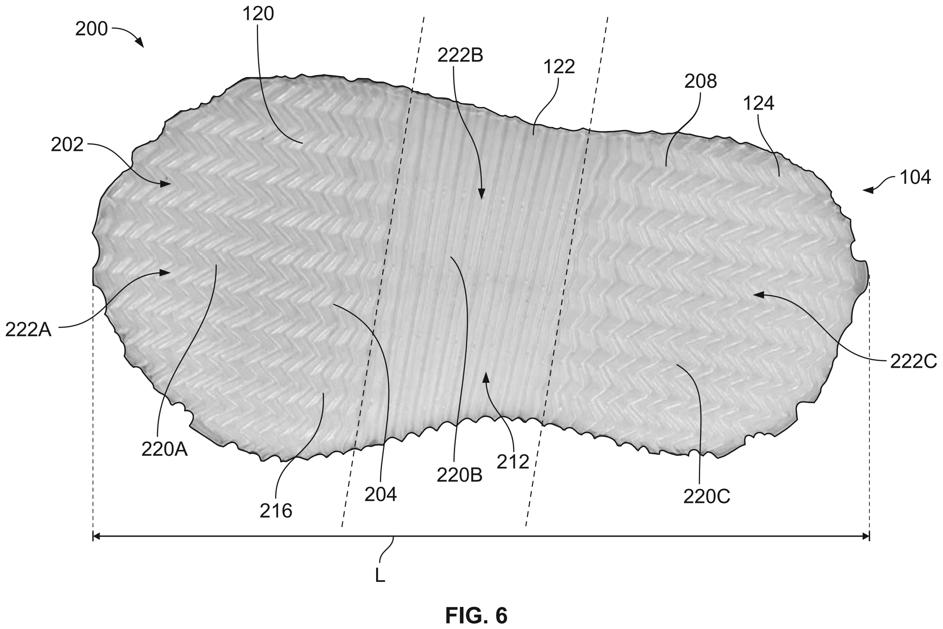

FIG. 6 depicts a polymer sheet 200 used to create a preformed component 202 for the sole structure 104. Specifically, the figure shows the polymer sheet 200 before it undergoes foaming, as described in detail below. As shown in FIG. 6, the polymer sheet 200 may include a plurality of or multiple ridges 204 and grooves 208 (e.g., to form corrugated sheets) that each function as a flexible hinge. In some examples, the ridges 204 and the grooves 208 form a pattern of repeated shapes (e.g., polygons), achieved through the orientation of unit cells 216 to create a tessellation 212. The tessellation 212 includes the unit cells 216 and defines a repeating geometric pattern made up of polygons or repeated shapes that are connected by multiple ridges 204 and grooves 208 to create a structure having flexible, durable, and lightweight properties. The types of polygons for the unit cell 216 of a tessellation 212 can be a triangle, quadrilaterals, pentagons, hexagons, octagons, or non-regular polygons.

In some examples, a single type of unit cell 216 is repeated along a predefined geometry. In some examples, unit cells 216 of different shapes can be interchangeably used to create a dynamic pattern to provide various levels of support and cushioning. For example, the tessellation can include hexagon-shaped unit cells in the heel region 124 to provide cushioning and transition into a series of triangular-shaped unit cells toward the midfoot region 122 to provide flexibility. The arrangement of these unit cells 216 not only defines the tessellation pattern 212 but also influences the macrocellular structure formed when multiple polymer sheets 200 are stacked. In some examples, as will be discussed below, the tessellation 212 may be designed to cover the entirety of the sole structure 104 with unit cells 216 aligned to follow the contours of a foot (not shown), or only a portion thereof.

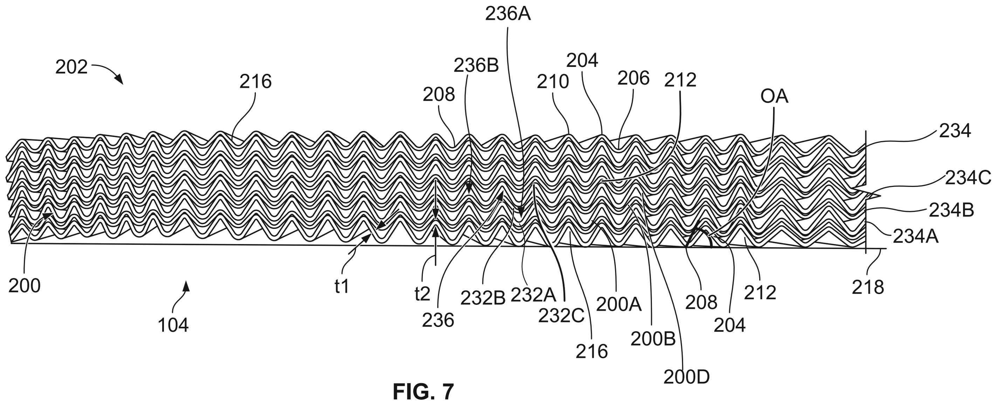

Referring to FIG. 7, in some examples, downward folds 206, created by grooves 208, and upward folds 210, created by ridges 204, can transform the preformed component 202 from a two-dimensional configuration that is coplanar with respect to a ground surface 218 to a three-dimensional configuration that includes portions that project upward and downward relative to the ground surface 218. The downward fold 206 can be obtained by folding the polymer sheet 200 upward such that the polymer sheet 200 forms a "V-shape" when viewed from the side view. The upward fold 210 can be obtained by folding the polymer sheet 200 downward such that the polymer sheet 200 forms an inverted "V-shape" when viewed from the side view. In other words, the grooves 208 (e.g., downward fold 206) can be defined as an inner concave region, causing each of the downward folds 206 to fold inward under external forces.

Conversely, the ridges 204 (e.g., upward folds 210) can be defined as an outer convex region, making them raised surfaces that buckle or flatten under external forces. For example, prior to folding the polymer sheet 200, the polymer sheet 200 can be flat and be oriented in a two-dimensional configuration. However, the polymer sheet 200 can be folded or partially folded, transitioning from a two-dimensional configuration to a three-dimensional configuration in response to external conditions (e.g., load, pressure, heat, etc.) until the polymer sheet 200 is configured into the preformed component 202. In some examples, the polymer sheets 200 can be pre-folded to form a three-dimensional configuration and transition to a two-dimensional configuration in response to external conditions. In a two-dimensional configuration (not shown), the polymer sheet 200 is characterized by having only a length and width, with a negligible thickness existing in a flat plane. From the two-dimensional configuration, the polymer sheet 200 can be manipulated by folding, transitioning the polymer sheet 200 into a three-dimensional configuration, as illustrated in FIG. 7. In other words, the transition of the polymer sheet 200 provides height and depth dimensions across the preformed component 202, forming a textured surface that can vary in complexity depending on the downward folds 206 and upward folds 210 that are disposed between the unit cells 216 that form the tessellation 212.

Referring again to FIG. 6, the tessellation 212 can include repeated ridges 204 and grooves 208 that extend parallel to one another in a desired direction. In particular, the ridges 204 and grooves 208 are repeated along the sole structure 104. Similar to the repeated unit cells 216, the ridges 204 and grooves 208 form repeated line segments (e.g., waveforms) that extend between two sides of a polymer sheet 200. In the illustrated example, the midfoot region 122 of the sole structure 104 includes the ridges 204 and grooves 208 that extend between a lateral side 126 of the sole structure 104 and a medial side 128 of the sole structure 104 such that the ridges 204 and grooves 208 are parallel with respect to one another. In some examples, repeated line segments can be used to interconnect two separate tessellations to create a cohesive sole structure. For example, the repeated line segments can be beneficial in areas where flexibility is desired. Therefore, as it will be discussed in detail below, the repeated line segments can be used to link to a first tessellation 220A at the forefoot region 120, a second tessellation 220B in the midfoot region 122, and a third tessellation 220C at the heel region 124.

As described above, the polymer sheet 200 can include a tessellation 212, which features a fold pattern defined by the ridges 204 and grooves 208. The pattern introduces fold areas and unit cells 216 shaped as polygons. The unit cells 216 can represent an unfolded area that are repeated within a predefined dimension (or area) of the polymer sheet 200. In other words, the unit cells 216 provide structural rigidity to the polymer sheet 200 while the ridges 204 and grooves 208 provide flexibility. In the example shown in FIG. 6, the unit cell 216 is a parallelogram. Adjacent unit cells 216 are connected by at least one of the ridges 204 or grooves 208 such that when subjected to external forces, the tessellation 212 created on the polymer sheet 200 can fold along the fold area (e.g., along the ridges 204 and grooves 208) while maintaining the shapes of the unit cells. Accordingly, the deformation along the fold area can be programmed such that the polymer sheet 200 deforms in a particular way or fashion to form the preformed component 202.

In some embodiments, one or more of the tessellations 212 may be applied along a length L of the polymer sheets 200 of the sole structure 104. For instance, a first tessellation 220A might cover the forefoot region 120, a second tessellation 220B the midfoot region 122, and a third tessellation 220C the heel region 124. The first tessellation 220A may feature different patterns compared to the second tessellation 220B, while it may have substantially identical but mirrored patterns compared with the third tessellation 220C. The tessellations 212 can vary along the length L of the polymer sheets 200, or they may be identical therealong. As mentioned, tessellations 212 involve repeating geometrical shapes or polygons, identified as unit cells 216, and the unit cells 216 can be oriented in a predefined manner to offer programmable cushioning when the polymer sheets 200 are foamed to form part of the sole structure 104. For example, unit cells 216 might be oriented at angles relative to a ground surface (see FIG. 7).

Referring to FIG. 7, an orientation angle OA is shown. The orientation angle OA refers to the angle between the polymer sheet 200 in a folded configuration and the ground surface 218. In some cases, the orientation angle OA can be measured by measuring the angle the unit cells 216 extend relative to the ground surface 218. In other words, the orientation angle OA is measured from groove abutting the ground surface 218 to an adjacent ridge 204.

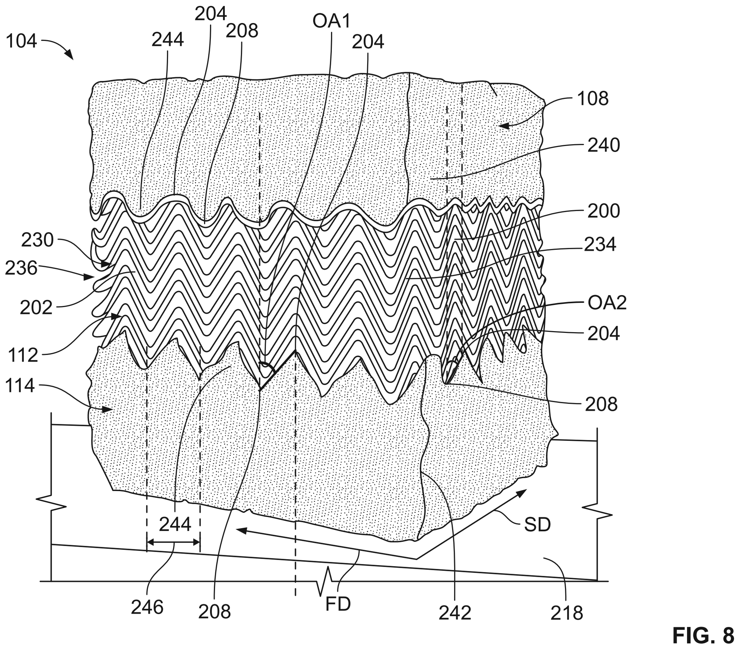

In some examples, multiple orientation angles can be measured based on the ridges 204 and grooves 208 that connects the unit cells 216. For example, referring to FIG. 8, a first orientation angle OA1 between the groove 208 and the ridge 204 can be measured along a first direction FD of the ground surface 218, while a second orientation angle OA2 between the groove 208 and the ridge 204 can be measured along a second direction SD of the ground surface 218. In some examples, the first orientation angle OA1 and the second orientation angle OA2 can be identical to each other. In some examples, the orientation angles OA1, OA2 can be different relative to each other.

Referring back to FIG. 6, different regions of the polymer sheet can include different orientation angles. Specifically, unit cells 216 in the heel region 124 may have an orientation angle between about 60 and 90 degrees relative to a ground surface (not shown), i.e., a ground surface upon which the sole structure 104 may be configured to rest, to provide optimal cushioning and support during pronation (e.g., foot roll). In the midfoot region 122, the unit cells 216 have an orientation angle between about 30 and 55 degrees relative to the ground surface to evenly distribute pressure and maintain stability. In the forefoot region 120, the unit cells 216 can have an orientation angle between about 10 and 30 degrees relative to the ground surface to enhance flexibility and propulsion once the polymer sheets 200 are foamed. The orientation angle can be adjusted based on the intended use (e.g., athletic, leisure, running, or walking).

In some examples, the size of the unit cell 216 can be consistent throughout the entirety of the tessellation 212. For example, the size can be determined by the spacing between two adjacent grooves 208 along a horizontal or vertical direction, or by the spacing between two adjacent ridges 204 in the same directions. Alternatively, the size can be defined by the spacing between the ridge 204 and the groove 208 that are directly adjacent to one another. The size of the unit cell 216 can affect the properties of the foam component in the sole structure 104. For instance, unit cells 216 in the heel region 124 might be larger than those in the midfoot region 122, or the size of the unit cells 216 might be larger in the heel region 124 compared to the forefoot region 120. In some cases, the size of the unit cells 216 might be uniform between the forefoot region 120 and the heel region 124, or the size could gradually increase from the forefoot region 120 to the heel region 124 (e.g., smaller in the forefoot and larger in the heel). As noted above, the first tessellation 220A and the third tessellation 220C of the polymer sheets 200 feature parallelogram-shaped unit cells, which can provide additional cushioning in the heel region 124 and improved propulsion in the forefoot region 120. Meanwhile, the second tessellation 220B includes line segments (e.g., to define a wave with crests and troughs) extending between the medial and lateral sides of the polymer sheets 200, which may aid in pressure distribution and stability. These properties of the preformed component can be inherent to a foamed component after the foaming process.

In some examples, polymer sheets 200 with strategically spaced volumes or spacings between adjacent polymer sheets 200 can facilitate a more efficient saturation process during manufacturing. The predetermined tessellation 212 and folding configuration of the polymer sheets 200 dictate the formation of macrocellular voids between sheets. In particular, the spacing between the sheets can allow for even distribution of supercritical gas throughout the material of the polymer sheets 200, reducing the need for the gas to navigate through the walls, as is common in the manufacture of conventional midsoles. This enhanced distribution enables faster and more uniform polymer saturation, enabling faster foaming process. For example, a conventional midsole can require up to six hours for complete saturation. However, strategic spacing of the polymer sheets 200 can significantly reduce the processing time, contributing to a more sustainable and energy efficient production cycle.

In some examples, the material used for the polymer sheets 200 can vary. Various polymers can be utilized to form the sheets, with key properties including flexibility, durability, and the ability to maintain precise folds being crucial for creating a foldable structure (as shown by the polymer sheets). Materials such as silicone rubber, polypropylene (PP), Ethylene-Vinyl Acetate (EVA), Polybutadiene Rubber (BR), thermoplastic polyurethane (TPU), and thermoplastic elastomers (TPE) are suitable for their flexibility and durability. In some embodiments, the polymer sheets 200 may be constructed using one or more materials. For example, unit cells 216 might be made from one material while the ridges 204 and grooves 208 are made from another, using insert molding or over-molding techniques. In some cases, the materials for the ridges 204 and grooves 208 may differ. In some examples, the material of the polymer sheet 200 can be identical for the unit cells 216 and for the ridges 204 and grooves 208.

In addition to selection of materials, the thickness of the unit cell 216, ridges 204, and grooves 208 can be adjusted to optimize cushioning after foaming. Referring to FIG. 7, in the illustrated example, a first thickness t1 of the unit cell 216 can be identical to a second thickness t2 of the ridges and grooves to provide consistent durability along the fold area. Conversely, in some examples, the unit cell 216 might have a first thickness t1 that is greater than a second thickness t2 of the ridges 204 and grooves 208 to allow for easier folding or bending. A thinner (cross-sectional) thickness for the plurality of ridges 204 and plurality of grooves 208 can enhance the flexibility of the polymer sheets 200. The thickness of the unit cell 216 may be influenced by the amount of folding of the ridges 204 and grooves 208. In some embodiments, the ridges 204 and grooves 208 may be fully compressed, causing gaps between respective ridges 204 and grooves 208 to be smaller than the thickness of the unit cell 216. In such cases, a thinner thickness for the ridges 204 and grooves 208 is beneficial. Conversely, if the ridges 204 and grooves 208 are partially compressed, a greater (cross-sectional) thickness for the ridges 204 and grooves 208 may be necessary. The thickness can be adjusted so that the unit cells 216 abut one another when the desired fold is achieved. In some embodiments, the ridges 204 and grooves 208 may be flat (e.g., without concave or convex gaps), making their thickness identical or substantially identical to the thickness of the unit cell 216 to provide additional stiffness (e.g., resistance to folding). The thickness of the polymer sheets 200 can be predetermined based on different regions of the sole structure 104.

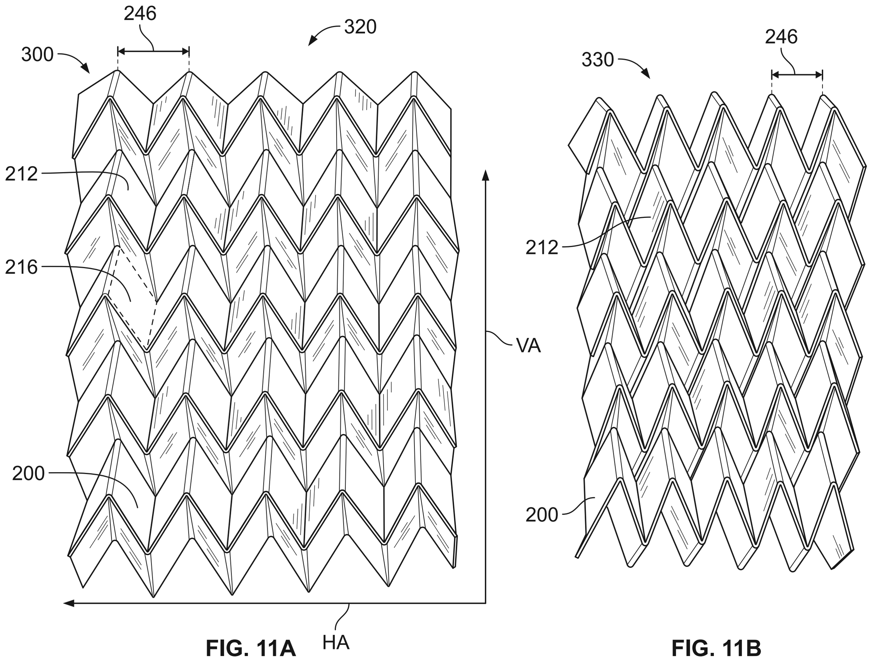

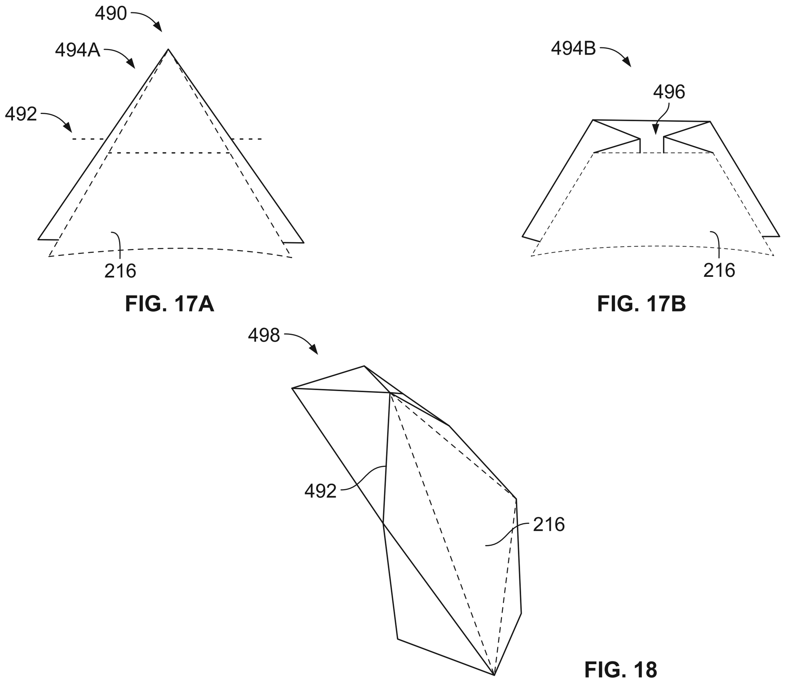

Still referring to FIG. 6, the preformed component 202 can include first unit cells 222A that are repetitively oriented to create a first pattern (or a first tessellation 220A) in a forefoot region 120, interconnected by ridges 204 and grooves 208 to facilitate deformation in a predetermined direction. In other words, the first unit cells 222A collectively define the first pattern along the forefoot region 120 (e.g., first region) and are interconnected integrally by the ridges 204 and grooves 208, which provides similar benefits of a living hinge to enable adjacent first unit cells 222A to articulate and pivot relative to one another. This articulation allows for controlled movement while maintaining structural integrity. Second unit cells 222B define a second pattern (or a second tessellation 220B) in the midfoot region 122 between the forefoot region 120 and the heel region 124, which are also linked by ridges 204 and grooves 208 for deformation in a different direction. Third unit cells 222C define a third pattern (or a third tessellation 220C) in the heel region 124, which are also linked by ridges 204 and grooves 208 for deformation in a different direction. The first, second, and third unit cells 222A, 222B, 222C can differ in at least size, shape, thickness, or orientation angle relative to the ground surface. Similarly, the first, second, and third unit cells 222A, 222B, 222C each define the first, second, and third patterns that are interconnected by ridges 204 and grooves 208. Referring to FIG. 7, an example of the preformed component 202 is shown in a stacked configuration, where the preformed component 202 includes polymer sheets 200 used to form a foam component for the sole structure 104. The preformed component 202 can include polymer sheets 200 that are configured in various ways to achieve desired structural and cushioning properties. For example, the polymer sheets 200 can be rolled into a cylindrical or spiral form, folded along predefined crease lines, or arranged in overlapping layers. In some examples, the polymer sheets 200 can be stacked in a flat configuration, rolled and then compressed, or folded into patterns such as accordion folds (see FIGS. 11A and 11B) or diamond folds (see FIG. 18) to create internal voids and controlled deformation zones, as will be discussed below. These arrangements can be selected based on the intended response characteristics of the foam component, such as energy return, flexibility, or anisotropic behavior. Similar to FIG. 6, the preformed component 202 includes polymer sheets 200 prior to foaming, stacked one above another. In the depicted example, one or more polymer sheets 200 are stacked on top of one another. For purposes of this description, the stacked configuration of the preformed component 202 will be described using three layers; however, it is understood that additional layers can be incorporated, such as five layers, ten layers, or more. For example, the one or more polymer sheets can include a first polymer sheet 200A, a second polymer sheet 200B, and a third polymer sheet 200C. The first polymer sheet 200A can be folded to form a first preformed layer 232A, the second polymer sheet 200B can be folded to form a second preformed layer 232B, and the third polymer sheet 200C can be folded to form a third preformed layer 232C. In the illustrated example, the first, second, and third preformed layers 232A, 232B, 232C may include identical tessellations 212 and are folded identically relative to one another. In some examples, however, the first, second, and third preformed layers 232A, 232B, 232C can include different tessellations 212 formed from unit cells 216 with different shapes or sizes and the degree of folding can be different.

The degree of folding describes the extent the polymer sheets 200 are folded along the ridges 204 and grooves 208 to form the first, second, and third preformed layers 232A, 232B, 232C. For example, the polymer sheets 200 including the tessellations 212 can be designed to allow for a degree of folding up to a predetermined value based on an initial bending of the ridges 204 and grooves 208. As described above, the ridges 204 and grooves 208 facilitate bending between adjacent unit cells 216 of the tessellation 212 to allow folding of the polymer sheets 200 to form preformed layers. In some examples, the predetermined value for the initial bending can change based on the arrangement of the ridges 204 and grooves 208 (e.g., upward and downward folds) or the thickness of the polymer sheet 200. Accordingly, the degree of folding of the performed layers 232A, 232B, 232C can be optimized for various functions. For example, a maximum degree of folding can provide benefits such as enhanced traction, grip, cushioning, and flexibility. On the other hand, a minimum degree of folding can provide durability and stability of the shoes despite lacking cushioning and flexibility.

The preformed layers 232A, 232B, 232C include a first set of voids 234 (e.g., microcellular voids) that make up each preformed layer 232A, 232B, 232C, such that a first preformed layer 232A includes a first plurality of voids 234A, a second preformed layer 232B includes a second plurality of voids 234B, and a third preformed layer 232C includes third plurality of voids 234C. Upon stacking, the first, second, and third preformed layers 232A, 232B, 232C may be adhered to one another with an adhesive (not shown), or a filler (not shown) could be used between the polymer sheets 200 to bond them together. When the preformed layers 232A, 232B, 232C are stacked, a second set of voids 236 (e.g., microcellular voids) are formed between the preformed layers 232A, 232B 232C, such that a fourth plurality of voids 236A is defined between the first preformed layer 232A and second preformed layer 232B, and a fifth plurality of voids 236B is defined between the second preformed layer 232B and third preformed layer 232C. The shape of the second set of voids 236 is determined by the shape of the unit cells 216, the degree of folding of preformed layers, and alignment of the preformed layers. The size and distribution of individual voids of the second set of voids 236 within the preformed component 202 can be tuned by adjusting the tessellations 212 and layer arrangement. For example, as will be discussed below, when the two adjacent preformed layers are aligned with one another, the individual voids of the second set of voids 236 may have a uniform shape and size. Alternatively, if the two adjacent preformed layers are misaligned, the individual voids of the second set of voids 236 may have different shapes or sizes.

When the preformed layers 232A, 232B, 232C are stacked, the first, second, and third plurality of voids 234A, 234B, and 234C define the microcellular structure of each preformed layer 232A, 232B, 232C and the fourth and fifth plurality of voids 236A, 236B define the macrocellular structure of the preformed component 202. As previously discussed, the macrocellular structure works in conjunction with the microcellular structure formed inside each preformed layer 232A, 232B, 232C during foaming, creating a dual-compression system that enhances cushioning, energy absorption, and weight reduction.

In alternate embodiments, the stacked configuration described above may include variations in the number, arrangement, and composition of foam layers to achieve different structural properties. For example, a foam component may include a first foam layer (e.g., first preformed layer 232A that is foamed) defining a first microcellular structure. The foam component also includes a second foam layer (e.g., preformed layer 232B that is foamed) defining a second microcellular structure. The second foam layer may be coupled to the first foam layer such that a macrocellular structure (e.g., corresponding with the fourth plurality of voids 236A) is defined between the first foam layer and the second foam layer. In this example, the first foam layer is a first folded polymer sheet and the second foam layer is a second folded polymer sheet that is distinct from the first folded polymer sheet. The first microcellular structure and the second microcellular structure may be open-celled structures. The first folded polymer sheet and the second folded polymer sheet may include a supercritical foam. In some examples, the first foam layer and the second foam layer are co-foamed layers, such that the first foam layer is adhered directly to the second foam layer.

In the illustrated example shown in FIG. 7, the grooves 208 of a first preformed layer 232A are positioned between adjacent ridges 204 of the second preformed layer 232B, thereby forming interdigitated layers that partially overlap (e.g., no offset) with one another. In some examples, the size of the second set plurality of voids 236 that are defined between preformed layers 232A, 232B, 232C can be manipulated by altering the amount of overlap between the stacked layers. For example, as the grooves 208 of the first preformed layer 232A align with the ridges 204 of the second preformed layer 232B, the size of the second set of voids 236 is reduced due to the compact arrangement between the adjacent layers. Conversely, the grooves 208 of the first preformed layer 232A might rest directly above (e.g., offset) the ridges 204 of the second preformed layer 232B. Intentionally misaligning two adjacent layers can control (e.g., increase or decrease) the size of the second set of voids 236, which can be beneficial for providing additional cushioning when the preformed layers are foamed. In this configuration, the size of the second set of cells 236 can be larger in comparison to when the adjacent preformed layers are partially overlapped.

In some examples, the adjacent preformed layers can be rotationally offset relative to one another to create a distorted void shape between the preformed layers. For instance, a zero - degree rotation of one of the preformed layers may lead to overlapping unit cells in a way that creates elongated voids, while a 90-degree rotation may create a completely different pattern of gaps. In some examples, one of the preformed layers can be flipped to alter the distribution of voids. For instance, if both of the preformed layers have a tessellation with protruding features, the protruding features will abut with one another, leading to deeper voids providing varied cushioning characteristics.

In some examples, while maintaining the same shape of the unit cells 216, the size of the unit cells 216 may vary along one or more directions of the polymer sheet 200 such that the second set of voids 236 between two adjacent preformed layers is gradually decreased. By varying the size of the unit cells 216, the amount of cushioning can be manipulated. For example, the size of the unit cells 216 can be gradually increased or decreased along the length L (see FIG. 6) of the preformed component 202. The degree of folding influences the macrocellular structure of the preformed component 202 created between preformed layers 232A, 232B, 232C during foaming. Greater folding can increase the size or complexity of individual voids of the second set of voids 236 between adjacent preformed layers in the preformed component 202, improving impact absorption and energy return. Conversely, minimal folding can produce smaller individual voids of the second set of voids 236 between adjacent preformed layers, which creates a more compact structure for added stability.

In addition to size and folding, the connectivity of adjacent voids of the fourth and fifth plurality of voids 236A, 236B determines whether the macrocellular structure of the preformed component 202 is open-celled or closed-celled. This allows for foamed structures to have selective open/closed properties, including an open macrocellular structure and a closed microcellular structure, an open macrocellular structure and an open microcellular structure, a closed macrocellular structure and a closed microcellular structure, or a closed macrocellular structure and an open microcellular structure. In some examples, a single foam component may include both a polymer sheet 200 that has an open microcellular structure and a polymer sheet 200 that has a closed microcellular structure. Further, a single foam component may also include both an open macrocellular structure between adjacent first, second, and third preformed layers 232A, 232B, 232C, and a closed macrocellular structure between adjacent first, second, and third preformed layers 232A, 232B, 232C. For example, a single foam component may include an open macrocellular structure between the first preformed layer 232A and the second preformed layer 232B, and a closed macrocellular structure between the second preformed layer 232B and the third preformed layer 232C. Expansion of flexible sheet materials may cause adjacent voids of the fourth and fifth plurality of voids 236A, 236B to interconnect, forming an open macrocellular structure that promotes airflow and dynamic cushioning. Conversely, rigid polymers and controlled cooling can maintain sealed voids of the fourth and fifth plurality of voids 236A, 236B, creating a closed macrocellular structure that enhances rigidity.

Correspondingly, it is possible for different regions (e.g., 120, 122, 124) to be configured with different macrocellular or microcellular properties. For example, an article of footwear can have a heel region 124 with an open macrocellular structure and an open microcellular structure to improve cushioning. A midfoot region 122 can have an open macrocellular structure and a closed microcellular structure (or vice versa). Further, a forefoot region 120 can have a closed macrocellular structure and a closed microcellular structure to improve energy return. In other examples, various regions of a sole structure can be tuned differently to provide other combinations of macrocellular and microcellular structures.

Referring now to FIG. 8, a stacked configuration of an exemplary preformed component 202 is depicted, which includes polymer sheets 200 that are compacted together and disposed between an upper foam layer 240 and a lower foam layer 242. In some embodiments, the arrangement of polymer sheets 200 of the preformed component 202 can be foamed to enhance cushioning in the sole structure 104. In some embodiments, the arrangement of polymer sheets 200 of the preformed component 202 can be used to provide propulsion, similar to a conventional plate (e.g., carbon plate) inserted into the sole structure 104. By controlling the degree of folding and the distribution of the second set of voids 236, the foam component that is defined by the structure of the preformed component 202 can store and release energy efficiently, delivering a spring-like effect for propulsion while maintaining cushioning performance.

In some examples, the orientation of the of the polymer sheets 200 of the preformed component 202 can be different. Still referring to FIG. 8, the polymer sheets 200 are coplanar with the ground surface 218 (e.g., parallel relative to the ground surface). However, in some examples, the polymer sheets 200 can be rotated to achieve an orthogonal position relative to the ground surface 218. In other words, the polymer sheets 200 can be stacked orthogonally relative to a ground surface 218. As will be discussed below (see FIG. 11), in some examples, a folding direction may provide larger cushioning benefits.

As described above, the stacked configuration of polymer sheets 200 of the preformed component 202 can be a part or portion of a midsole 112 of the sole structure 104. For example, and referring to FIG. 8, the upper foam layer 240 may be configured as the insole 108, and the lower foam layer 242 may be configured as the outsole 114. The upper foam layer 240 may include protrusions 244 that are configured to fit into gaps 246 between ridges 204 (e.g., convex regions of the polymer sheets). Similarly, the lower foam layer 242 may have protrusions 244 that fit between gaps 246 defined by ridges 204. In some embodiments, the protrusions 244 of the upper and lower foam layers 240, 242 can be bonded to the polymer sheets 200 with adhesives, and the entire structure including the upper foam layer 240, stacked configuration of polymer sheets 200, and the lower foam layer 242 can be foamed to create a cohesive sole structure (or unitary sole structure).

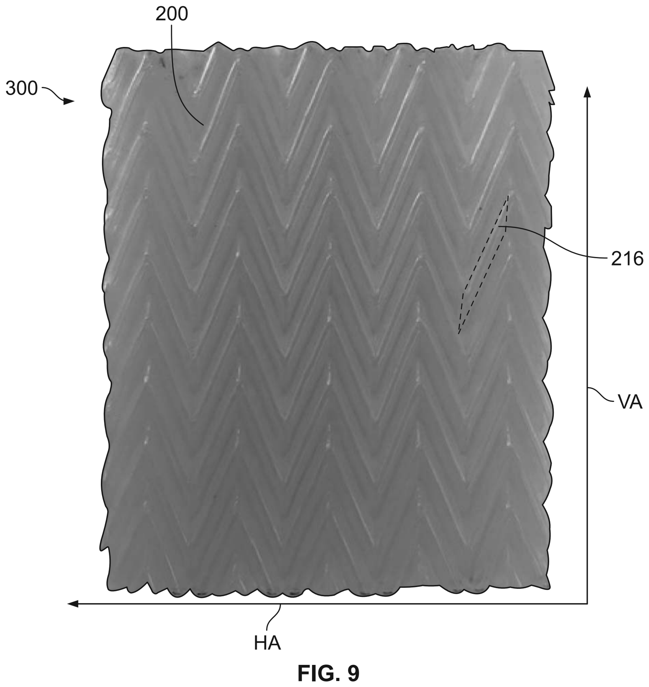

Referring now to FIGS. 9-11, various views are shown of polymer sheets 200 having a zigzag tessellation 300 (also known as an arrow tessellation, a chevron tessellation, or a herringbone tessellation). The zigzag tessellation 300 refers to a complex pattern composed of repeating unit cells 216 that resemble a parallelogram. As previously noted, orientations of the unit cells 216 can influence the properties of the zigzag tessellation 300. Specifically, the angular orientation of the unit cells 216 can affect the shape of the zigzag tessellation. For instance, as shown in FIG. 9, the unit cells 216 can be parallelograms, which causes them to be slanted rather than perfectly rectangular. From a geometric perspective, a zigzag tessellation 300, with parallelograms arranged in a series of V-like formations, enables the parallelograms to align and distribute stress evenly across the surface. Furthermore, in some cases, the geometric arrangement enhances the stability by creating a rigid framework that resists shifting and deformation under load. Thus, using parallelograms oriented in alternating directions is advantageous for achieving effective interlocking and load distribution (e.g., cushioning), while also enhancing structural stability. The zigzag tessellation 300 influences the macrocellular structure formed when multiple sheets are stacked so that the individual voids of the second set of voids 236 are interconnected (e.g., to form an open macrocellular structure). During foaming, the second set of voids 236 between polymer sheets 200 that are defined by the zigzag pattern 300 contribute to flexibility and weight reduction of the sole structure 104. Accordingly, the parallelogram is ideal for the unit cell 216 shape of a sole structure intended for foaming.

The skewed or angled appearance of the unit cells 216 can offer shock-absorbing (e.g., energy dissipation) properties when the polymer sheets 200 are foamed. For example, the angular orientation of the unit cells 216 can be measured relative to a vertical axis VA. The unit cells 216 may be oriented at a lower angle, ranging from about 1 degree to about 45 degrees, or at a higher angle, ranging from about 46 degrees to about 90 degrees. At lower angles, the unit cells 216 are arranged horizontally parallel to a horizontal axis HA. When a pressure or impact force is applied to this orientation, the shock is absorbed over a larger surface area as the force is distributed along the length of the unit cells 216, which deform by spreading out along the horizontal axis HA. In other words, unit cells 216 at lower angles can effectively distribute lateral forces. Conversely, at higher angles, the unit cells 216 are oriented vertically parallel to the horizontal axis HA. When a pressure or impact force is applied to this orientation, the angular configuration of the unit cells 216 adds stiffness in specific directions, which is advantageous for handling direct and localized forces. Therefore, unit cells 216 at higher angles may be less effective at distributing lateral forces compared to those at lower angles.

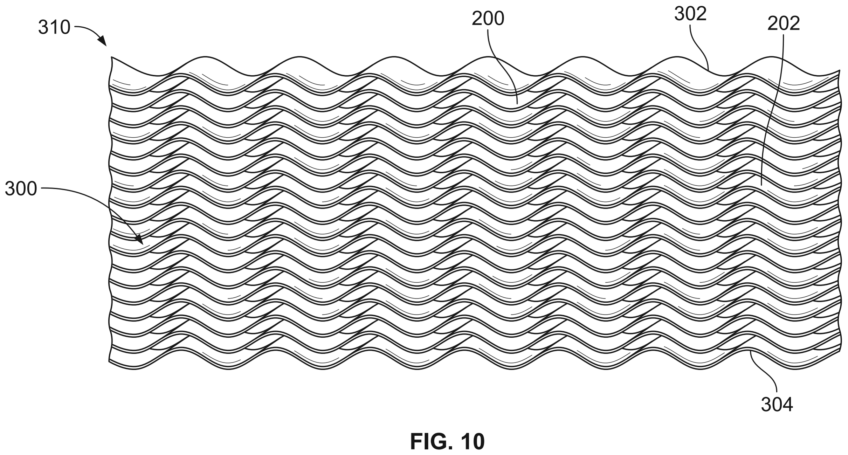

Referring to FIG. 10, the polymer sheets 200 with the zigzag tessellation 300 can be stacked to form part of the sole structure 104. Specifically, the preformed component 202 formed from the polymer sheets 200 can be placed between an upper or uppermost layer 302 and a lower or lowermost layer 304. Unlike the polymer sheets 200, the upper layer 302 and the lower layer 304 are parallel to one another and feature a flat surface. As briefly mentioned above, the upper layer 302 and the lower layer 304 can be bonded to the stack of preformed component 202 using an adhesive to create a bonded assembly 310. In some cases, using flat upper and lower layers 302 and 304 can be advantageous. For example, the upper layer 302 could be foamed to serve as an insole, enhancing user comfort. The bonded assembly 310 can be foamed to form a unified sole structure. In some examples, referring back to FIG. 9, the materials used for the upper and lower layers 302, 304 can differ from the material of the polymer sheets 200. Additionally, the materials of the upper layer 302, lower layer 304, and polymer sheets 200 may be the same. In some cases, only the upper layer 302 or only the lower layer 304 may be bonded to the preformed component 202.

In some embodiments, the zigzag tessellation 300 can be compressed along the horizontal axis HA before foaming to increase stiffness in specific regions. For example, FIG. 11A depicts the zigzag tessellation 300 in a resting position 320 and FIG. 11B depicts the zigzag tessellation 300 in a compressed position 330. As the gaps 246 between each unit cell 216 decreases, the zigzag tessellation 300 may exhibit increased stiffness. Conversely, and referring to FIG. 11A, increasing the gaps 246 between unit cells 216 can enhance energy dissipation by distributing the load throughout the unit cells 216. The polymer sheets 200 can be stacked with alternating layers of zigzag tessellation 300 in the resting and compressed positions 320, 330. In some cases, polymer sheets 200 can be manufactured with varying regions of zigzag tessellation 300 in either the resting or compressed positions. The stiffness and energy mitigation properties of the polymer sheets 200 can be tailored based on the degree of compression of the zigzag tessellation 300. Thus, the zigzag tessellation 300 of the polymer sheets 200 can be customized according to the user's foot location. For example, different regions of the sole can benefit from different gap sizes. For example, it can be beneficial to have larger gaps for cushioning whereas it may be beneficial to have smaller gaps for additional stiffness and stability.

The transformation from FIG. 11A to 11B illustrates a folding direction in both directions. In some examples, a tessellation 212 can provide folding in a single direction. In some examples, a tessellation 212 can provide folding in two directions. In some examples, a tessellation 212 can provide folding in both directions. In some examples, the magnitude of folding in one direction can be greater than the magnitude of folding in the other direction. By programming the polymer sheets 200 by including different tessellations 212 with different shaped unit cells 216, the folding direction can be manipulated to provide anisotropic properties or isotropic properties. Anisotropic properties are important when directional performance is desired, such as greater flexibility along the forefoot region 120 for propulsion or increased stiffness laterally for stability. Conversely, isotropic properties provide uniform behavior in all directions, which is beneficial for balanced cushioning and consistent energy return across a sole structure.

By controlling tessellation geometry and folding magnitude, the foam component can be tailored to deliver targeted performance characteristics for specific regions (120, 122, 124) of the article of footwear 100. For example, upon foaming the preformed component 202 to form a foamed component, it may be beneficial to align the folding direction orthogonally relative to a ground surface to maximize the cushioning. Moreover, aligning folds of polymer sheets 200 orthogonally to the ground surface in the forefoot region 120 can reduce a magnitude of compression and increase energy return during toe-off, where forces are concentrated. Similarly, the heel region 124 experiences high impact forces during initial ground contact of the foot during the gait cycle and can benefit from orienting folds of polymer sheets 200 to allow controlled vertical deformation while resisting lateral collapse, which may improve shock absorption and stability. The folding configurations can be arranged to form select macrocellular and microcellular configurations to further tune performance. For instance, the heel region 124 may include an open microcellular structure within each polymer sheet 200 and an open macrocellular structure for impact absorption. The midfoot region 122 may include a closed microcellular structure within each polymer sheet 200 and an open macrocellular structure for stability and controlled flexibility. The forefoot region 120 may include a closed microcellular structure within each polymer sheet 200 and a closed macrocellular structure to improve energy return, as previously discussed. Through the integration of various folding configurations and cellular structure, different regions (120, 122, 124) of the sole can deliver specialized responses to directional forces.

In some embodiments, the polymer sheets 200 can be produced using additive manufacturing techniques. For instance, additive manufacturing methods such as fused deposition modeling (FDM) or multi-material printing can be used to create the polymer sheets 200. Alternatively, the polymer sheets 200 can be manufactured through stamping. To make the grooves 208 and ridges 204 of the polymer sheets 200 foldable, living hinges can be incorporated using thinner sections or by varying the infill density along the grooves 208 and ridges 204. In some cases, the polymer sheets 200 can feature predetermined angular patterns that do not require creasing or folding to achieve the desired performance.

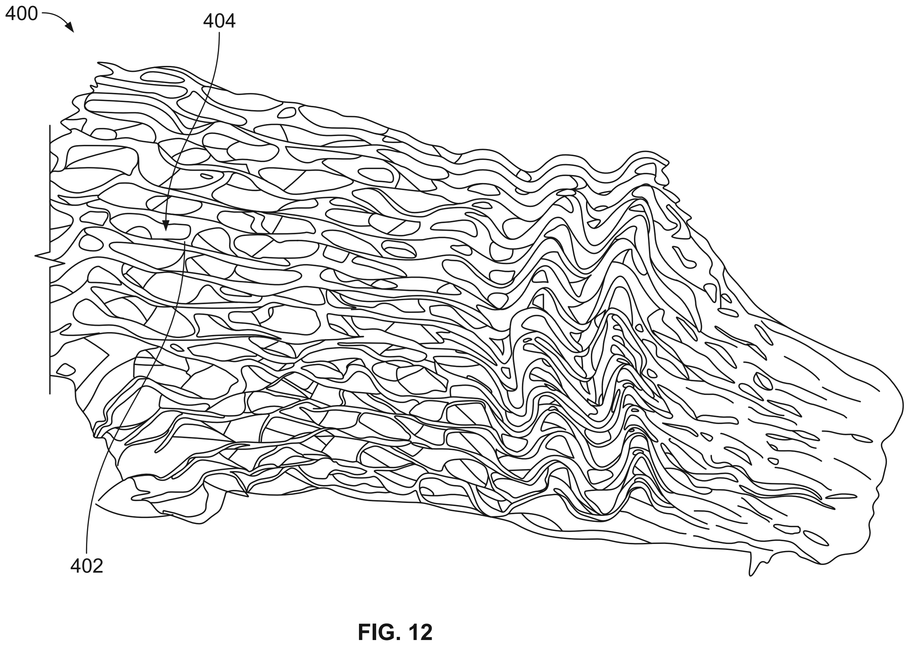

In some embodiments, as illustrated in FIG. 8, the polymer sheet 200 can be stacked to create a preformed component 202 for the midsole 112. Upon undergoing a foaming process, a foamed component 400 (see FIG. 12) can be formed. Referring to FIG. 12, the foamed component 400 can include a plurality of cell walls 402 (e.g., preformed layers 232A, 232B, 232C) forming a plurality of cells 404 (e.g., second set of voids 236). The plurality of cell walls 402 of FIG. 12 resembles the shape of the shape of the unit cells 216 (see FIG. 6) forming a tessellation 212. Additionally, the shape of the plurality of cells 404 of FIG. 12 resembles the second set of voids 236 formed between multiple sheets of the preformed component 202 shown in FIG. 8. Referring to FIG. 12, the size of the plurality of cells 404 can be manipulated to change a foam density of the foamed component 400. The foam density refers to the amount of material contained within a given volume, which affects its structural properties such as strength, flexibility, and insulation capabilities, with higher densities generally providing increased durability and support. As previously discussed, the second set of voids 236 between adjacent preformed layers define the macrocellular structure of the preformed component 202, which may behave as open-celled or closed-celled depending on whether adjacent voids of the second set of voids 236 interconnect during expansion or remain sealed. Open macrocellular networks allow airflow and dynamic cushioning, while closed macrocellular structures provide rigidity and water resistance. For example, the size of the plurality of cell walls 402 of the foamed component 400 can be greater than the size of the second set of voids 236 that define the macroceullar structure of the preformed component 202 by between about 10% and about 200%, or between about 20% and about 180%, or between about 50% and about 150%, or between about 75% and about 125%. In some examples, the concentration of the foaming agent during the foaming process can also influence the foam's expansion within the foamed component 400.

In a contemplated example, there may be a foam block coupled to at least one of a first foam layer (e.g., first polymer sheet 200A) or a second foam layer (e.g., second polymer sheet 200B), similar to the configuration shown in FIG. 8. Additionally, the first foam layer includes a plurality of first folds corresponding to a plurality of first pre-folds (e.g., tessellations 212) of a first unfoamed layer (e.g., preformed layer 232). The second foam layer includes a plurality of second folds corresponding to a plurality of second pre-folds (e.g., tessellations 212) of a second unfoamed layer (e.g., preformed layer 232B). Correspondingly, the first foam layer includes a plurality of first folds corresponding to a first preset molecular orientation of a first unfoamed layer (e.g., preformed layer 232A) and the second foam layer includes a plurality of second folds corresponding to a preset second molecular orientation of a second unfoamed layer (e.g., preformed layer 232B). Further, the macrocellular structure defines a repeating cell. In the contemplated example, the first foam layer and the second foam layer may be the midsole 112 of the article of footwear 100.

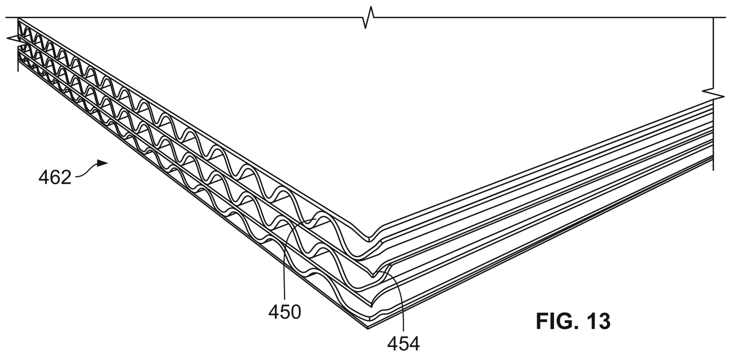

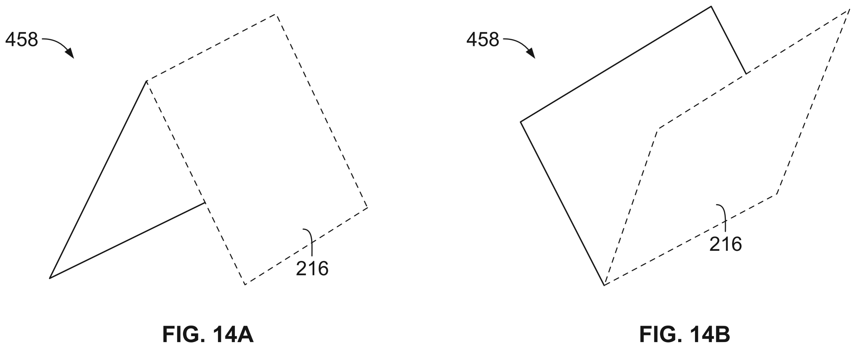

As shown in FIGS. 9-11B, the polymer sheets 200 may feature the zigzag tessellation 300 with unit cells 216 shaped as parallelograms. However, other types of cellular structures can be formed instead of the tessellation described above to provide similar benefits. For instance, FIG. 13 shows a corrugated structure 450 disposed between an upper layer 452 and a lower layer 454. The upper layer 452 and the lower layer 454 are flat and parallel to one another. In some examples, the corrugated structure 450 can include rounded edges (e.g., a waveform), such as that shown in FIG. 13, or can include sharp edges (e.g., a zigzag shape), such as the mountain fold 458 shown in FIG. 14A or the valley fold 460 shown in FIG. 14B. As depicted in FIG. 13, a thickness of the corrugated structure 450 can be uniform throughout a length thereof. In some examples, the thickness of the corrugated layer can be different throughout the length. In some examples, the corrugated structure 450 can be disposed between the adjacent flat layers (e.g., upper and lower layers 452, 454) either in the same direction or in different directions relative to one another. The corrugated structure 450 can enhance flexibility, cushioning, and traction, among other benefits. For example, stacking the corrugated structure 450 in the same direction can provide greater flexibility for a wider range of motion during walking or running. The corrugated structure 450 can be stacked between the upper and lower layers 452, 454 to form a corrugated polymer sheet assembly 462. In some examples, the corrugated polymer sheet assembly 462 can be alternating between a corrugated structure 450 and a flat layer (e.g., flat layers sandwiching a corrugated structure) to form the preformed component 202.

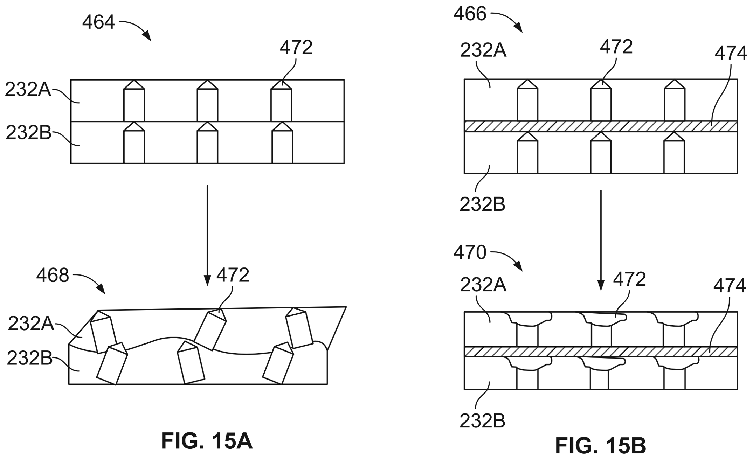

FIGS. 15A and 15B show preformed layers 232A, 232B in a first state 464, 466 before an external force is applied to the preformed layers 232A, 232B and in a second state 468, 470 after an external force is applied to preformed layers 232A, 232B, highlighting the effect of the structural configuration of polymer sheets 200 on energy absorption. As shown in FIG. 15A, without a plate 474 (e.g., a rigid plate) between preformed layers 232A, 232B, the peaks 472, which represent downward or upward folds 206, 210 of the preformed layers 232A, 232B, experience a lateral translation due to the absence of a stabilizing interface, such as the plate 474. The plate 474 can be formed from metal, a composite, or any other rigid material that provides structural reinforcement and resists deformation under high loads. Examples may include carbon fiber composites, or plastics such as TPU (thermoplastic polyurethane) and reinforced nylon. These materials can be selected when a balance of rigidity and lightweight properties is desired. In some examples, the plate 474 may be constructed from the same polymer material as the sheets 200 but with increased thickness, or may incorporate a closed microcellular structure to improve stiffness and load-bearing capacity. Further, the lateral movement caused by lacking a stabilizing interface such as the plate 474 reduces the ability of the peaks 472 to maintain alignment under compression. That is, rather than primarily compressing along the downward or upward folds 206, 210, the downward or upward folds 206, 210 shift (e.g., translate, twist, bend, etc.) relative to one another to provide compression.

With continued reference to FIG. 15B, when the plate 474 is included between the preformed layers 232A, 232B, the peaks 472 shift or compress in a more uniform manner with less translation, because the plate 474 acts as a stabilizing barrier that distributes compressive forces evenly across the downward or upward folds 206, 210. This configuration enables the structure to absorb energy more efficiently in the second, compressed state 470, improving cushioning performance and reducing localized stress concentrations. The corrugated structure 450 shown in FIG. 13 showcases an example of folded polymer sheets 200 with flat layers 452, 454 that provide structural support similar to the plate 474. In some examples, the macrocellular structure defined by first and second foam layers (e.g., polymer sheets 200A, 200B) or first and second folded layers (e.g., preformed layers 232A, 232B) may include a first macrocellular structure defined between the first foam layer or folded layer and the plate, and a second macrocellular structure defined between the second foam layer or folded layer and the plate 474.

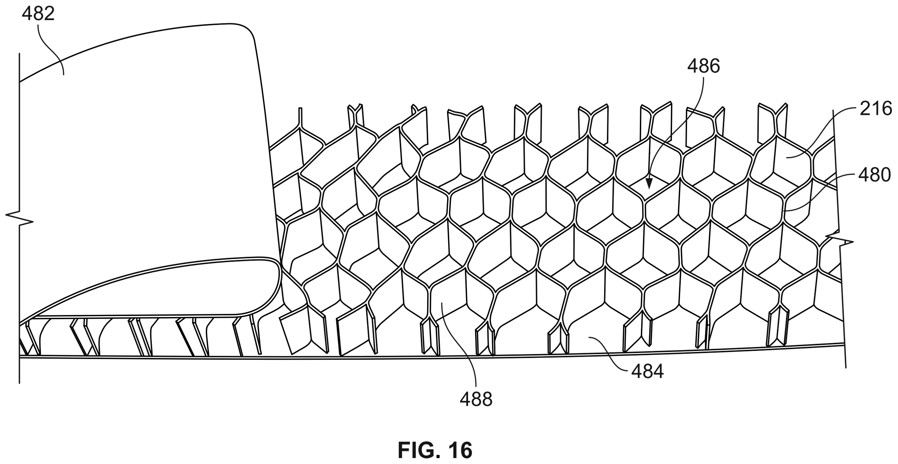

Referring now to FIG. 16, a honeycomb structure 480 is situated between an upper layer 482 and a lower layer 484. Similar to the upper and lower layer of FIG. 13, the upper layer 482 and the lower layer 484 are flat and parallel to one another. The honeycomb structure 480 extends perpendicularly between the upper and lower layers 482, 484. The honeycomb structure 480 can offer strength, flexibility, and lightweight support, with the honeycomb structure 480 providing cushioning and shock absorption through cell expansion under compression, which is beneficial during running or walking. The honeycomb structure 480 includes a plurality of honeycomb cells 486 that is repeatedly formed to create the honeycomb structure 480 within a predefined area. The honeycomb cells 486 defines honeycomb cell walls 488, which provide strength and distribute forces evenly across the honeycomb structure 480. In some examples, the honeycomb cells 486 can be uniform (e.g., uniform in size and shape) throughout a predefined area. In some examples, the thickness of the honeycomb cells walls 488 can vary to control the density of the honeycomb structure 480. For instance, thicker honeycomb cell walls 488 can enhance stiffness, while thinner honeycomb cell walls 488 can improve flexibility.

Additionally, the size of the honeycomb cells 486 can differ from those of adjacent honeycomb cells 486 to influence the overall density of the honeycomb structure 480, thereby providing a range of modifiable characteristics (e.g., strength, flexibility, and weight). In the illustrated example, the honeycomb cell walls 488 are raised orthogonally (e.g., vertically) relative to the lower layer 484 and the upper layer 482 and the honeycomb cell walls 488 connect the lower layer 484 and the upper layer 482 such that the honeycomb cells 486 are covered by the upper layer 482 and the lower layer 484. Alternatively, the honeycomb cell walls extend laterally between the lower layer 484 and the upper layer 482 of the honeycomb structure 480, defining side walls (not shown) such that the honeycomb cells 486 are exposed laterally along the sidewalls. In some examples, the honeycomb structure 480 can alternate between a honeycomb structure 480 and a flat layer (e.g., a lower layer or an upper layer) to form a preformed component.

Some examples of folding patterns can include rectangular unit cells 216, such as the mountain fold 458 shown in FIG. 14A and the valley fold 460 shown in FIG. 14B. In other examples, the folding pattern of the polymer sheet 200 may incorporate more complex folds, such as a sink fold 490 shown in FIG. 17A, which is a type of origami fold where a portion of the polymer sheets 200 are inverted inward along pre-creased lines 492. The pre-creased lines 492 enable the sink fold 490 to transition from an expanded configuration 494A to a collapsed configuration 494B, such that a portion of the polymer sheet 200 is inverted inward to define a hollowed region 496, as shown in FIG. 17B. This transformation allows the material to redistribute stress and absorb impact forces more effectively. Further, in the expanded configuration 494A (see FIG. 17A), the unit cells 216 that define the folds are triangular. In the collapsed configuration 294B (see FIG. 17B), the pre-creased lines 492 form unit cells 216 in the shape of trapezoids. When used in the context of a foam component, the sink fold 490 can influence the macrocellular structure by creating deeper individual voids of the second set of voids 236 between adjacent preformed layers 232A, 232B, 232C, which is beneficial for cushioning. Additionally, the inward collapse of material can help control anisotropic properties by directing folding in a specific axis, improving propulsion or stability in targeted regions of the sole structure 104.

In alternate examples, the folding pattern of the polymer sheet 200 may include a diamond fold 498 shown in FIG. 18, which is an origami technique where a section of the polymer sheets 200 are collapsed inward and outward along diagonal pre-creased lines 492 to form a diamond-shaped depression. The diagonal pre-creased lines 492 create multiple intersecting planes that allow the material to flex in more than one direction, improving adaptability under dynamic loads. For instance, ridges 204 and grooves 208 can be arranged to create unit cells 216 that form triangular sections, which define the diamond fold 498 and enable controlled inward and outward collapse. When applied to a foam component, the diamond fold 498 can influence the macrocellular structure by generating complex geometries in the second set of voids 236 between adjacent preformed layers 232A, 232B, 232C. Additionally, the diamond fold can be used to introduce anisotropic properties, enabling greater deformation along one axis for propulsion while maintaining lateral stability in the sole structure 104.

The present disclosure provides improved systems and methods for forming or manufacturing a foam component of a sole structure, in particular, a midsole, using a supercritical foaming process. More specifically, the systems and methods of the present disclosure provide a molding process that controls the expansion of the foam component to eliminate the need to compress a foam component to a final size after expansion, reducing cost and complexity of the manufacturing process while reducing cycle time. Further, by controlling expansion, the resultant foam component has more uniform density and cell size, while also reducing overall density and increasing resiliency and compressibility.

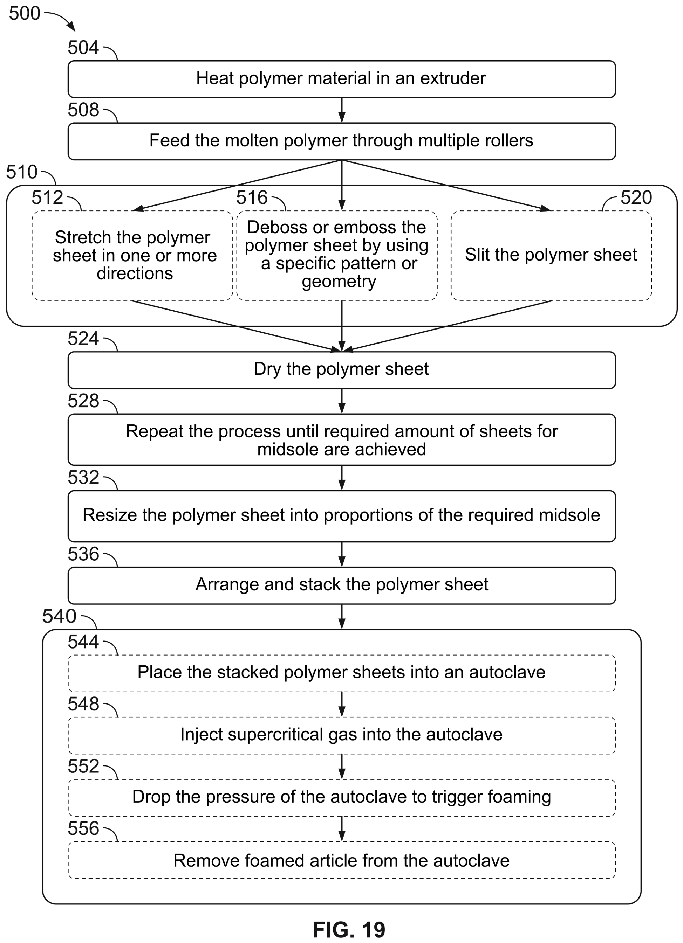

FIG. 19 illustrates a method 500 for manufacturing a foam component for a sole structure, e.g., a midsole, or another portion of an article footwear. While the method 500 is described below with reference to various steps, it is appreciated that not all steps may be required. Further, the steps may not be carried out in the order presented below, and some steps may be performed simultaneously. Additionally, while the method 500 is described with reference to the polymer sheets 200 discussed above, it is appreciated that the method 500 can be used with other polymer sheets, to form a variety of components.

The method 500 includes a step 504 of heating the polymer material (e.g., polymer pellets) in an extruder to a molten state. In some cases, the molten polymer can include a single material or can include multiple materials. For example, the molten polymer may include thermoplastic polyurethane (TPU), ethylene-vinyl acetate (EVA), nylon, nylon polyamide, thermoplastic polyester elastomer (TPEE), thermoplastic polyamide, polyolefin elastomer (POE), etc., or combinations thereof. For example, the molten polymer can be a mixture of about 70% TPU and about 30% TPEE, or a mixture of about 78% EVA, about 10% TPEE, and about 12% POE. Various manufacturing processes such as extrusion, calendaring, thermoforming, or compression molding can be used to form the polymer sheet 200 from the molten polymer. In particular, the method includes a step 508 for feeding molten polymer through multiple rollers (e.g., calendaring), which can be beneficial for mass producing the polymer sheets 200. In some cases, extruding the polymer materials can be beneficial so that the polymer sheets 200 can include equal cell sizes and cell structures after the foaming process.

The method 500 includes a step 510 of providing various properties prior to foaming. The method 500 can further include a step 512 of stretching the polymer sheet 200 in one or more directions (e.g., pre-stretching) to provide anisotropic characteristic along one or more directions. Anisotropic properties refer to materials having different characteristics and behaviors when measured along different directions. In the context of a sole structure, anisotropic properties can benefit the design by providing tailored support and cushioning. Therefore, the anisotropic characteristics of the foamed sole structure are particularly advantageous, as they allow for varying degrees of flexibility and stiffness in different areas. This design provides enhanced compression in the vertical direction for shock absorption and improved abrasion resistance, enabling specific regions to be engineered for greater rigidity to ensure stability while maintaining softer, more compressible areas for comfort, ultimately enhancing overall performance and user experience.

In some examples, the method 500 can further include a step 516 of debossing or embossing the polymer sheets 200 by using a specific pattern or geometry. As described above, the polymer sheets 200 can include a specific pattern to form tessellations 212. The unit cell 216 forming the pattern may vary in shape, size, or thickness. In some examples, the method can further include a step 520 of slitting (e.g., cutting or removing excess material to form a groove) the polymer sheet 200. In particular, slitting the polymer sheets along the plurality of ridges 204 and the plurality of grooves 208 can create living hinges by removing additional material. In some embodiments the steps 512, 516, 520 described above can be conducted when the polymer sheet 200 is still a green sheet (e.g., an undried or uncured polymer sheet). In some embodiments the steps 516, 520 can be performed after the polymer sheet 200 is dried which will be discussed in detail below.

Various manufacturing methods can be adopted to provided programmability of the polymer sheets 200. For example, as an alternative, the polymer sheets 200 can be manufactured via compression molding. The molten polymer can be poured into a mold to form a deformable polymer sheet 200. In particular, the mold can provide variable thickness between the unit cells. For example, the thickness may vary at the plurality of ridges 204 and grooves 208, such that the polymer sheet 200 can deform along the plurality of ridges 204 and grooves 208. In another example, the polymer sheets 200 can be manufactured via additive manufacturing. Similar to the compression molding method described above, the polymer sheets 200 can be additively manufactured such that the creased regions along the plurality of ridges 204 and grooves 208 may include a flexible material to form a living hinge or may include a reduced thickness to enable the polymer sheets 200 to deform.

The method can include a step 524 of drying or curing the polymer sheets. In particular, once the polymer sheet is formed, the polymer sheet 200 is dried to a desired shape. In some cases, the green sheet can be subjected to a compression load or a tensile load to morph the shape of the polymer sheet 200. For example, the green sheet can be subjected to compression such that the polymer sheet 200 can be fully hardened (e.g., cured) at a desired shape. In some examples, the polymer sheets 200 can be dried prior to tooling the polymer sheet 200 to obtain desired pattern and crease lines along the plurality of ridges 204 and grooves 208. For example, as briefly discussed about, the polymer sheets 200 with higher elasticity can be slitted to form the plurality of ridges 204 and grooves 208 that can be folded (or partially folded) upon receiving a load.

The method can include a step 528 of repeating the manufacturing process until the required amount of polymer sheets 200 for the midsole are obtained. In some examples, the plurality of polymer sheets 200 can be manufactured using identical methods. In some examples, the plurality of polymer sheets 200 can be manufactured using different methods. Once the required number of polymer sheets 200 for the midsole are obtained, the method 500 includes a step 532 of resizing individual polymer sheets 200, separately or together, to have the required proportions for the sole structure 104. The method 500 further includes a step 536 of arranging and stacking the polymer sheets 200 in a predetermined orientation. For example, a first polymer sheet with a first pattern can be surrounded on all sides by a second polymer sheet with a second pattern. In some cases, the polymer sheets 200 can be stacked in a predetermined orientation. In some examples, the polymer sheets 200 can be both arranged and stacked to a predetermined orientation at step 536.

The plurality of sheets can be stacked or arranged (e.g., rolled, bent, interlaced, etc.) in a predetermined arrangement to form the preformed component 202. The method 500 includes a step of a foaming process 540. The foaming process 540 further includes a step 544 of placing the preformed component 202 into a cavity of an autoclave. The cavity of the autoclave has a volume that is larger than that of the preformed component 202, such that the preformed component 202 only contacts a support surface, e.g., a bottom surface, of the autoclave upon which the preformed component 202 is placed. Accordingly, in some cases, the autoclave can be sized to accept a plurality of preformed components 202, which can be expanded simultaneously. Further, while a mold release agent can be applied to the cavity before placing the preformed component 202 in the cavity, the application of a mold release agent is not required since the preformed component 202 is not compressed by and in contact with the walls of the cavity. By not including the mold release agent, process complexity and cycle time is reduced, and bonding between the foam component and other components, at later steps, can be improved, e.g., where the foam component is a midsole, between the midsole and an outsole, and between the midsole and an upper.

With the preformed component 202 in the autoclave, the autoclave can then be pressurized. As will be described in greater detail below, the pressure is selected to achieve a desired expansion of a supercritical fluid that is introduced into the autoclave and absorbed by the preformed component 202, resulting from releasing the pressure. Additionally, it is also possible that the particular pressure can be selected in accordance with a blowing agent used in later steps, such that the blowing agent is a supercritical fluid within the autoclave. For example, the pressure within the cavity of the autoclave can be increased from a first or initial pressure, e.g., atmospheric pressure, to a second or maximum pressure. In some embodiments, the second pressure can be between about 5 megapascals (MPa) and about 35 MPa above the initial pressure, or more specifically, between about 10 MPa and about 30 MPa above the initial pressure, between about 11 MPa and about 28 MPa above the initial pressure, between about 13 MPa and about 28 MPa above the initial pressure, between about 18 MPa and about 28 MPa above the initial pressure, between about 15 MPa and about 28 MPa above the initial pressure, or between about 15 MPa and about 20 MPa above the initial pressure. In other embodiments, the second pressure can be less than about 10 MPa or greater than about 30 MPa.

The autoclave can be heated to increase the temperature of the preformed component 202 to near or above a glass transition temperature of a material of the preformed component 202, such that the preformed component 202 may be in an at least partially molten state. Where the preformed component 202 is made of one or more materials, the temperature may be near or above a glass transition temperature of any or all of the one or more materials. For example, in some cases the autoclave can be heated to between about 115 Celsius (C) and about 180 C, or more or less depending on the specific material being expanded. More specifically, the autoclave can be heated to be between about 120 C and about 160 C, between about 120 C and about 150 C, or between about 120 C and about 135 C.

The specific pressure and temperature combination achieved can be selected to allow for a blowing agent, e.g., nitrogen, carbon dioxide, or another gas or combination of gases, to attain a supercritical state. In the supercritical state, the blowing agent does not exist in a liquid or gaseous state of matter and is also not a solid. The supercritical state helps initiate the formation of a microcellular structure within the polymer sheets 200, where numerous small cells nucleate and expand throughout the material, forming the microcellular structure. Additionally, the specific temperature can be selected to reduce curing or dwell time at later steps. For example, thicker components may require higher temperatures than thinner parts in order to achieve similar cure times, or dwell times for a desired amount of saturation. By controlling these parameters, the process ensures uniform saturation of the polymer sheets 200, which later influences both the microcellular architecture inside each sheet and the macrocellular voids formed between polymer sheets 200.

The method 500 includes a step 548 of injecting a supercritical fluid, i.e., a blowing agent, into the cavity of the autoclave. The supercritical fluid can be injected as a gas that then transitions to the super critical fluid, or a supercritical fluid can be injected directly into the autoclave. The supercritical fluid is preferably nitrogen gas (N2), but can also be another type of fluid, for example, carbon dioxide gas (CO2), or mixtures thereof. The supercritical fluid is held within the cavity of the autoclave for a predetermined period of time, e.g., a soak or dwell time, to allow the supercritical fluid to be absorbed by the preformed component 202, such that the preformed component 202 becomes (fully) saturated with the supercritical fluid. For example, the dwell time in some embodiments can range between about 90 minutes and about 240 minutes, between about 90 minutes and about 180 minutes, between about 120 minutes and about 240 minutes, between about 120 minutes and about 180 minutes, between about 100 minutes and about 180 minutes, or less than about 90 minutes, or more than about 180 minutes. The specific dwell time required to allow the supercritical fluid to penetrate and saturate the preformed component 202 may vary depending on any of the pressure and temperature within the autoclave, size of the preformed component 202, and the material of the preformed component 202. In some embodiments, the dwell time can be selected to achieve partial saturation or full saturation of the preformed component 202.

After saturating the preformed component 202, the pressure within the autoclave can be (rapidly) dropped, e.g., from the second pressure to a third or final pressure. The third pressure can be equal to an initial pressure, an intermediate pressure between the first pressure and the second pressure, or a minimum pressure that is below the first pressure. The difference between the second pressure and the third pressure can be selected to achieve a desired expansion ratio, e.g., a ratio of the volume of the foam component to a volume of the preformed component 202. For example, in some cases, the change in pressure may result in an expansion ratio of between about 1.0 and about 1.2, between about 1.2 and about 1.4, between about 1.4 and about 1.6, between about 1.6 and about 1.8, between about 1.8 and about 2.0, or greater than about 2.0. The change in pressure may occur over a predetermined period of time, or at a predetermined rate. The specific drop or rate in drop of the pressure can be selected to affect a substantially uniform expansion of the preformed component, for example, to create an approximately uniform cell size and material density throughout the resultant foam component. Uniform expansion results in consistency in the microcellular structure within each polymer sheet 200 and helps maintain the predetermined macrocellular voids between polymer sheets 200 of the preformed component 202, preserving the tessellation 212 geometry that contributes to cushioning and flexibility at the macrocellular level. Further, by ensuring substantially uniform expansion, dimensional stability is preserved during expansion, allowing more minute and intricate details, e.g., protrusions, recesses, or textures, that have been formed into the preformed component, e.g., at step 510, to remain intact following expansion. Accordingly, any decorative or performance features that are present on the preformed component 202 are also present on the foam component. In some embodiments, the pressure within the autoclave can be dropped, for example, by controlling the opening of a valve.

The method 500 includes a step 552 of dropping the pressure of the autoclave to trigger the foaming. In particular, as a result of the drop in pressure, the supercritical fluid contained within the preformed component begins to nucleate and expand, thereby triggering the foaming of the preformed component 202 to form the foam component. Nucleation of the supercritical fluid forms a microcellular structure that includes (closed) supercritical-fluid-filled cells within the preformed component 202, which expand as the pressure drops and thereby increase the volume of the preformed component. In alternate examples, the preformed component 202 can form open-cell microcellular structures, such that the fluid can transfer through interconnected voids of the first, second, or third plurality of voids 234A, 234B, 234C, which may influence properties such as breathability or fluid permeability. The cells can have an approximately uniform size and distribution throughout the formed foam component. The cell size, e.g., an average cell size, can depend on the specific composition of the polymer that is being expanded and the expansion ratio. Also, because cell size and distribution are approximately uniform, a cell density throughout the foam component is also approximately uniform. Further, the drop in pressure results in a corresponding drop in the temperature of the preformed component. The drop in temperature can reduce the temperature of the preformed component to be below the glass transition temperature, re-solidifying, e.g., crystallizing, the material of the preformed component to form the foam component, thereby forming cells, i.e., pockets, of supercritical fluid, e.g., nitrogen or another blowing agent, in the midsole. Correspondingly, the cells are fixed in place within the microcellular structure of each polymer sheet 200 after step 552. The macrocellular structure of the preformed component 202 is also fixed (i.e., cannot be transformed or reconfigured) at this stage of the process. The combined microcellular and macrocellular structures achieved through this process result in a dual-scale structure that improves energy return, weight reduction, and structural integrity compared to conventional foams. Moreover, due to re-solidification of the foam component, the foam component can be at or near final size following removal from the autoclave.

The method 500 includes a step 556 of removing the foamed article from the autoclave at or near final size. In particular, this step 556 can eliminate the need for any subsequent compression steps to reduce the foam component to the final, production size. Specifically, in other known supercritical foaming methods, a foam component is typically foamed to an intermediate size, e.g., to an expansion ratio of 2.0, and then placed into a compression mold where the foam component is compressed to reduce the foam component to a final size, e.g., at an expansion ratio of 1.8 the foam component is generally held in the compression mold for a period of time to ensure that the final foam component does not re-expand when removed from the compression mold. The period of time for which the foam component is held under compression varies with temperature, but may generally range between 500 and 550 seconds, leading to increased complexity, cost, and cycle times. Further, compression molding steps generally require that a release agent be applied to the mold to prevent sticking that can damage the parts, but which also makes it more difficult to bond other components to the midsole at later steps. Moreover, compression can cause wrinkling of the outer surface or skin of the foam component, which may remain present in the final part. Eliminating the need to compress the foam component to a final size following the foaming process reduces system cost and complexity. Relatedly, because the foam part is at or near its final size in the autoclave, wrinkling of the outer surface or skin can be reduced or eliminated, and the distribution and size, i.e., volume or a largest dimension, of cells remains substantially uniform.

Any of the embodiments described herein may be modified to include any of the structures or methodologies disclosed in connection with different embodiments. Further, the present disclosure is not limited to articles of footwear of the type specifically shown. Still further, aspects of the articles of footwear of any of the embodiments disclosed herein may be modified to work with any type of footwear, apparel, or other athletic equipment.

As noted previously, it will be appreciated by those skilled in the art that while the disclosure has been described above in connection with particular embodiments and examples, the disclosure is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

### INDUSTRIAL APPLICABILITY

Numerous modifications to the present disclosure will be apparent to those skilled in the art in view of the foregoing description. Accordingly, this description is to be construed as illustrative only and is presented for the purpose of enabling those skilled in the art to make and use the invention. The exclusive rights to all modifications which come within the scope of the appended claims are reserved.

## Claims

1. A method for manufacturing a foam component of a sole structure (104), the method comprising:
fabricating a polymer sheet (200) to form a preformed component (202);
drying the polymer sheet (200);
slitting the polymer sheet (200) to form one or more unit cells (216; 222A, 222B, 222C), the unit cells (216; 222A, 222B, 222C) configured to provide different characteristics or behaviors along directions of the polymer sheet (200);
resizing the polymer sheets (200) into proportions of the sole structure (104);
arranging and stacking the polymer sheets (200);
positioning the polymer sheets (200) within a cavity of an autoclave;
injecting a blowing agent into the cavity of the autoclave, the blowing agent becoming a supercritical fluid that saturates the polymer sheets (200);
dropping a pressure within the cavity of the autoclave to trigger foaming of the polymer sheets (200) to form the foam component; and
removing the foam component from the autoclave.

2. The method of claim 1, wherein the one or more unit cells (216; 222A, 222B, 222C) are repeatedly oriented to define a pattern.

3. The method of claim 1 or 2, wherein the one or more unit cells (216; 222A, 222B, 222C) are spaced apart by a plurality of grooves (208) or a plurality of ridges (204).

4. The method of at least one of the preceding claims further comprising the step of stretching the polymer sheet (200) in one or more directions.

5. The method of at least one of the preceding claims, wherein the polymer sheet (200) is fabricated via molding.

6. The method of at least one of the preceding claims, wherein a material of the preformed component (202) is a thermoplastic polymer.

7. The method of at least one of the preceding claims further comprising the step of applying adhesives or fillers between the polymer sheets (200) when arranging and stacking the polymer sheets (200).

8. The method of at least one of the preceding claims, wherein the foam component is a midsole (112).

9. The method of at least one of the preceding claims, wherein the foam component includes a plurality of cells (404) with approximately uniform size and distribution throughout the foam component.

10. The method of claim 9, wherein a shape of the plurality of cells (404) of the foam component resembles a shape of the unit cells (216; 222A, 222B, 222C) of the polymer sheet (200), and
wherein the shape of the unit cell (216; 222A, 222B, 222C) is a parallelogram.

11. A preformed component (202), comprising:
one or more polymer sheets (200; 200A, 200B, 200C) including a first polymer sheet (200A), a second polymer sheet (200B), and a third polymer sheet (200C), the one or more polymer sheets (200; 200A, 200B, 200C) having:
a tessellation (212), the tessellation (212) defined by repeated unit cells (216; 222A, 222B, 222C), each of the unit cells (216; 222A, 222B, 222C) having a geometric shape that is repeated in a pattern, the unit cells (216; 222A, 222B, 222C) being interconnected by flexible hinges that are either ridges (204) or grooves (208) that facilitate bending between adjacent unit cells (216; 222A, 222B, 222C) of the tessellation (212) to allow the one or more polymer sheets (200; 200A, 200B, 200C) to be folded into a preformed form,
wherein the first polymer sheet (200A) is folded into a first preformed layer (232A) and is stacked above the second polymer sheet (200B), which is folded into a second preformed layer (232B), creating a first plurality of voids (234A) between the first preformed layer (232A) and the second preformed layer (232B), and
wherein the third polymer sheet (200C) is folded into a third preformed layer (232C) and is stacked above the second polymer sheet (200B), which is folded into the second preformed layer (232B), creating a second plurality of voids (234B) between the second preformed layer (232B) and the third preformed layer (232C).

12. The preformed component of claim 11, wherein adjacent polymer sheets (200; 200A, 200B, 200C) are adhered to each other by using an adhesive to form a stacked configuration of polymer sheets (200; 200A, 200B, 200C),
wherein a filler is applied between a plurality of voids (234A, 234B) formed between adjacent polymer sheets (200; 200A, 200B, 200C),
wherein a foamed component is created when the preformed component is subjected to foaming, wherein the plurality of voids (234A, 234B) of the preformed component expands during a foaming process to form a plurality of cells (404), and wherein the foamed component has similar properties as the preformed component.

13. The preformed component of claim 11 or 12, wherein at least the shape or size of the first plurality of voids (234A) is different from the shape or size of the second plurality of voids (234B), and
wherein shape of the plurality of cells (404) are substantially identical to the shape of the plurality of voids (234A, 234B).

14. The preformed component of at least one one of the claims 11 to 13, wherein the first polymer sheet (200A) and the third polymer sheet (200C) are flat and parallel to one another, and
wherein the second polymer sheet (200B) is a corrugated structure (450) or a honeycomb structure (480) that is disposed between the first polymer sheet (200A) and the third polymer sheet (200C).

15. The preformed component of at least one of the claims 11 to 14, wherein the first, second, and third preformed layers (232A, 232B, 232C) are different in at least size, shape, thickness, or orientation angle relative to a ground surface (218).
